# EUROPEAN PATENT APPLICATION

(11) **EP 4 848 624 A1**
(43) Date of publication of application: **02.12.2026**
(21) Application number: 25760644.2
(22) Date of filing: 13.01.2025
(51) Int. Cl.: H04J 3/06

(54) **DELAY REPORTING METHOD AND APPARATUS**

(30) Priority: 01.03.2024 CN 202410243239; 08.05.2024 CN 202410565627
(71) Applicant: HUAWEI TECHNOLOGIES CO., LTD., Shenzhen, Guangdong 518129 (CN)
(72) Inventor: HE, Xiang, Shenzhen, Guangdong 518129 (CN); LYU, Jingfei, Shenzhen, Guangdong 518129 (CN); CHEN, Liqing, Shenzhen, Guangdong 518129 (CN)
(74) Representative: Gill Jennings & Every LLP
(86) International application number: PCT/CN2025/071978
(87) International publication number: WO 2025/180100

(57) **Abstract**

Embodiments of this application provide a delay reporting method. The method may be applied to a first module. The first module may report a target delay corresponding to data at a plurality of specific locations in a data flow, where the plurality of specific locations are separated by a fixed length, and a periodicity of the plurality of specific locations corresponds to a periodicity of inserting a padding sequence into the data flow. In embodiments of this application, if the first module corresponds to a transmitter, the target delay corresponding to the data at the specific locations is equivalent to a maximum delay; if the first module corresponds to a receiver, the target delay corresponding to the data at the specific locations is equivalent to a minimum delay. This solution enables accurate reporting of delay information.

## Description

This application claims priorities to Chinese Patent Application No. 202410243239.5, filed with the China National Intellectual Property Administration on March 1, 2024 and entitled "DELAY REPORTING METHOD AND APPARATUS", and to Chinese Patent Application No. 202410565627.5, filed with the China National Intellectual Property Administration on May 8, 2024 and entitled "DELAY REPORTING METHOD AND APPARATUS", both of which are incorporated herein by reference in their entireties.

### TECHNICAL FIELD

This application relates to the communication field, and in particular, to a delay reporting method and apparatus.

### BACKGROUND

Data exchange may be performed between communication apparatuses. A transmitter may send a packet to a receiver and add a sending timestamp to the packet. Correspondingly, after receiving the packet from the transmitter, the receiver may record a receiving timestamp for subsequent processing. For example, in time synchronization scenarios, the receiver may perform time synchronization based on the sending timestamp and the receiving timestamp. The transmitter may be understood as a communication apparatus functioning as a transmitter, and the receiver may be understood as a communication apparatus functioning as a receiver.

The accuracy of the sending timestamp and the receiving timestamp directly affects the results of subsequent processing. For example, in time synchronization scenarios, the accuracy of the sending timestamp and the receiving timestamp directly affects the precision of time synchronization.

Therefore, how to accurately determine the sending timestamp and the receiving timestamp of a packet at both the transmitter and the receiver is an urgent problem to be resolved.

### SUMMARY

Embodiments of this application provide a delay reporting method and apparatus, enabling accurate reporting of delays.

According to a first aspect, this application provides a delay reporting method. The method may be applied to a first module. The first module may report a target delay corresponding to data at a plurality of specific locations in a data flow, where the plurality of specific locations are separated by a fixed length, and a periodicity of the plurality of specific locations corresponds to a periodicity of inserting a padding sequence into the data flow. In this embodiment of this application, if the first module corresponds to a transmitter, the target delay corresponding to the data at the specific locations is equivalent to a maximum delay; if the first module corresponds to a receiver, the target delay corresponding to the data at the specific locations is equivalent to a minimum delay. This solution enables accurate reporting of delay information.

In a possible implementation, the periodicity of the plurality of specific locations is an integer multiple of 8712 data blocks, or the periodicity of the plurality of specific locations is an integer multiple of 8704 data blocks. 8712 is the periodicity after the padding sequence is inserted into the data flow, and 8704 is the periodicity before the padding sequence is inserted into the data flow. In a specific example, when the first module corresponds to the transmitter, the periodicity of the specific locations corresponds to 8704; when the first module corresponds to the receiver, the periodicity of the specific locations corresponds to 8712. The periodicity of the specific locations being an integer multiple of 8172 data blocks or an integer multiple of 8704 data blocks may be understood as the periodicity corresponding to an integer multiple of a length of 8172 data blocks or an integer multiple of a length of 8704 data blocks. In a possible implementation, the data block includes 128 bits or 120 bits. For example, if the data block is a data block obtained through inner forward error correction (forward error correction, FEC) encoding, the data block includes 128 bits; if inner FEC encoding is not performed on the data block or if inner FEC decoding is performed on the data block, the data block includes 120 bits. In a specific example, when the first module corresponds to the transmitter, the data block includes 120 bits; when the first module corresponds to the receiver, the data block includes 128 bits.

In a possible implementation, the periodicity of the plurality of specific locations is an integer multiple of any one of the following values: 8704*120=1044480 bits, 8704*128=1114112 bits, 8712*128=1115136 bits, or 8712*120=1045440 bits. If the first module corresponds to the transmitter, before the first module performs a parity sequence (pad) addition operation and a padding sequence addition operation on the data flow, the periodicity of the specific locations is an integer multiple of 8704*120=1044480 bits; after the first module performs a parity sequence addition operation on the data flow, the periodicity of the specific locations is an integer multiple of 8704*128=1114112 bits; after the first module further performs the parity sequence addition operation on the data flow, the periodicity of the specific locations is an integer multiple of 8712*128=1115136 bits. If the first module corresponds to the receiver, before the first module performs a parity sequence deletion operation and a padding sequence deletion operation on the data flow, the periodicity of the specific locations is an integer multiple of 8712*128=1115136 bits; after the first module performs a parity sequence deletion operation on the data flow, the periodicity of the specific locations is an integer multiple of 8704*128=1114112 bits; after the first module performs the parity sequence deletion operation on the data flow, the periodicity of the specific locations is an integer multiple of 8704*120=1044480 bits.

In a possible implementation, the periodicity of the plurality of specific locations may be an integer multiple of 64 data blocks or an integer multiple of 65 data blocks. 65 is the periodicity after the padding sequence is inserted into the data flow, and 64 is the periodicity before the padding sequence is inserted into the data flow. In a specific example, when the first module corresponds to the transmitter, the periodicity of the specific locations is an integer multiple of 64 data blocks; when the first module corresponds to the receiver, the periodicity of the specific locations is an integer multiple of 65 data blocks. The periodicity of the specific locations being an integer multiple of 64 data blocks or an integer multiple of 65 data blocks may be understood as that the periodicity corresponding to an integer multiple of a length of 64 data blocks or an integer multiple of a length of 65 data blocks.

In a possible implementation, each data block in the 64 data blocks and the 65 data blocks may include 4 bits. In this scenario, insertion of the padding sequence may be insertion of a 4-bit pilot every 64 4-bit data blocks.

In a possible implementation, the specific location may be a start location of the data block. The start location of the data block may be a 1^{st} byte, a 1^{st} bit, or a 1^{st} symbol (symbol) of the data block. In a scenario in which the data block includes 128 bits, the data block described herein may be an FEC codeword.

In a specific example, the FEC codeword may be an inner FEC codeword. In other words, the specific location may be a start location of the inner FEC codeword.

In a possible implementation, the specific location is a start location of a data block immediately after the padding sequence is inserted into the data flow, and the start location is a 1^{st} bit, a 1^{st} symbol, or a 1^{st} byte of that data block.

In a possible implementation, the data flow is a data flow obtained through inner FEC encoding. Specifically, if the first module corresponds to the transmitter, the first module may perform the inner FEC encoding operation and the pad addition operation on data entering the first module. Correspondingly, in an example, the data flow described herein may be a data flow on which the inner FEC encoding operation and the pad addition operation are performed. If the first module corresponds to the receiver, in an example, the data flow may be a data flow sent by the transmitter to the first module. In other words, the data flow is a data flow entering the first module, and the inner FEC encoding operation and the pad addition operation are performed on the data flow at the transmitter. In another example, it is considered that after the transmitter sends the data flow to the receiver, the receiver may perform inner FEC decoding on the data flow. Therefore, the data flow may alternatively be a data flow obtained by the receiver by performing inner FEC decoding on the received data flow. In other words, if the first module is a module corresponding to the receiver, in another example, the data flow may be a data flow obtained through inner FEC decoding.

In a possible implementation, in addition to inserting the padding sequence into the data flow, the transmitter may further insert a parity sequence. Specifically, when performing inner FEC encoding on the data flow, the transmitter may insert an 8-bit parity sequence for every 128-bit data. When inserting the pad, the transmitter inserts a 1024-bit pad every 8704 inner FEC blocks. Therefore, a periodicity of inserting, by the transmitter, the padding sequence into the data flow is an integer multiple of a periodicity of inserting the parity sequence into the data flow. Because the periodicity of inserting the padding sequence into the data flow is an integer multiple of the periodicity of inserting the parity sequence into the data flow, a peak location of a large sawtooth overlaps a peak location of a small sawtooth, and a trough location of the large sawtooth overlaps a trough location of the small sawtooth. Therefore, the periodicity of the specific locations may be determined based on the periodicity of inserting the padding sequence into the data flow, so as to determine the target delay.

In a possible implementation, the target delay is a delay of the data at the plurality of specific locations that passes through the first module. Alternatively, the target delay is a delay of the data at the plurality of specific locations that passes through an inner FEC (inner FEC) layer in the first module. When the first module is an optical module, the target delay is a delay of the data at the plurality of specific locations that passes through the optical module. Alternatively, the target delay is a delay of the data at the plurality of specific locations that passes through an inner FEC layer in the optical module. The inner FEC layer is a layer that implements an inner FEC function.

In a possible implementation, in the data at the plurality of specific locations, data at each specific location may correspond to one first delay. Therefore, the data at the plurality of specific locations may correspond to a plurality of first delays. It is considered that the existing institute of electrical and electronics engineers (institute of electrical and electronics engineers, IEEE) 802.3cx defines a maximum delay register and a minimum delay register for each layer of a physical layer in clause 90. Therefore, to be compatible with a mechanism for reporting a delay by the physical layer in IEEE 802.3cx clause 90, a maximum value and/or a minimum value among the plurality of first delays may be reported. In other words, the target delay may be the maximum value and/or the minimum value among the plurality of first delays. In this case, the first module may further measure the first delay corresponding to the data at each of the plurality of specific locations to obtain the plurality of first delays, so as to report the maximum value and/or the minimum value among the plurality of first delays, thereby enabling reporting of delay information.

In a possible implementation, a new register may be defined to report the maximum value and/or the minimum value to a second module.

In a specific example, a maximum transmit (transmit, TX) delay register and/or a minimum TX delay register of an inner FEC are/is defined. The maximum TX delay register is used as a module of the transmitter to report the maximum value, and the minimum TX delay register is used as a module of the transmitter to report the minimum value. In other words, when the first module corresponds to the transmitter, the first module may report the maximum value to the second module via the maximum TX delay register of the inner FEC, and/or report the minimum value to the second module via the minimum TX delay register of the inner FEC.

In another specific example, a maximum receive (receive, RX) delay register and/or a minimum RX delay register of an inner FEC are/is defined. The maximum RX delay register is used as a module of the receiver to report the maximum value, and the minimum RX delay register is used as a module of the receiver to report the minimum value. In other words, when the first module corresponds to the receiver, the first module may report the maximum value to the second module via the maximum RX delay register of the inner FEC, and/or report the minimum value to the second module via the minimum RX delay register of the inner FEC.

In a possible implementation, the first module may report the maximum value and/or the minimum value to the second module via an existing register. In this manner, the existing register may still be used to report the target delay.

In a specific example, if the first module corresponds to the transmitter, the first module may report the maximum value to the second module via a maximum TX delay register of a physical medium attachment (physical medium attachment, PMA)/physical media dependent (physical media dependent, PMD). Similarly, the first module may report the minimum value to the second module via a minimum TX delay register of the PMA/PMD.

In another specific example, if the first module corresponds to the receiver, the first module may report the maximum value to the second module via a maximum RX delay register of a PMA/PMD. Similarly, the first module may report the minimum value to the second module via a minimum RX delay register of the PMA/PMD.

In a possible implementation, during specific implementation of reporting the target delay by the first module, the first module may report the target delay to the second module. In an example, the second module may be a media access control (media access control, MAC) layer module of a communication apparatus. In this way, the MAC layer module may compensate for a recorded timestamp based on the target delay, so that a timestamp obtained through compensation is more accurate.

In a possible implementation, the first module may be an optical module or a physical (physical, PHY) layer chip. The optical module or the PHY layer chip can provide the inner FEC function.

In a possible implementation, the optical module includes an inner FEC module, and the inner FEC module is configured to implement the inner FEC function. The inner FEC module includes an inner FEC encoding module and/or an inner FEC decoding module. The inner FEC encoding module is configured to implement an inner FEC encoding function, and the inner FEC decoding module is configured to implement an inner FEC decoding function.

According to a second aspect, this application provides a delay reporting method. The method may be applied to a first module. The first module may obtain a delay jitter value of target data passing through a first submodule in the first module. The target data is data sent by the first module or data received by the first module. The first submodule includes a submodule with a fixed delay jitter. Further, delay information is reported to a second module based on the delay jitter value. In this embodiment of this application, because the first submodule introduces the delay jitter, a delay of the target data passing through the first module jitters. Therefore, when the first module reports the delay information to the second module, the first module reports the delay information based on the delay jitter value introduced by the first submodule, so that the reported delay information is more accurate.

In a possible implementation, the first module may further determine a first delay of the target data passing through a second submodule in the first module. In an example, the second submodule may be a submodule that almost does not introduce a delay jitter. Correspondingly, during specific implementation of reporting the delay information to the second module, the first module may report the delay information to the second module based on the delay jitter value and the first delay. In other words, the first module may report the delay information to the second module based on the delay jitter value and the first delay of the target data passing through the second submodule that almost does not introduce a delay jitter, so that the delay information reported by the first module to the second module is more accurate.

In a possible implementation, the first module may determine a target delay based on the delay jitter value and the first delay, and report the target delay as the delay information to the second module.

In a possible implementation, if the first module corresponds to a communication apparatus functioning as a transmitter, the first communication apparatus may determine a sum of the delay jitter value and the first delay as the target delay. If the first communication apparatus corresponds to a communication apparatus functioning as a receiver, the first communication apparatus may determine a difference between the first delay and the delay jitter value as the target delay. In this manner, the target delay reported by the first module can meet the following requirement: "a delay reported by a transmitter is equivalent to a maximum delay, and a delay reported by a receiver is equivalent to a minimum delay".

In a possible implementation, it is considered that the existing IEEE 802.3cx defines a maximum delay register and a minimum delay register for each layer of a physical layer in clause 90. Therefore, to be compatible with a mechanism for reporting a delay by the physical layer in IEEE 802.3cx clause 90, the first delay may include two delays: a maximum delay of the target data passing through the second submodule and a minimum delay of the target data passing through the second submodule. Correspondingly, in this case, the target delay includes: a maximum target delay obtained based on the maximum delay and the delay jitter value, and a minimum target delay obtained based on the minimum delay and the delay jitter value.

In a possible implementation, a new register may be defined to report the maximum target delay and/or the minimum target delay to the second module.

In a specific example, a maximum TX delay register and/or a minimum TX delay register of an inner FEC are/is defined. The maximum TX delay register is used as a module of the transmitter to report the maximum target delay, and the minimum TX delay register is used as a module of the transmitter to report the minimum target delay. In other words, when the first module corresponds to the transmitter, the first module may report the maximum target delay to the second module via the maximum TX delay register of the inner FEC, and report the minimum target delay to the second module via the minimum TX delay register of the inner FEC.

In another specific example, a maximum RX delay register and/or a minimum RX delay register of the inner FEC are/is defined. The maximum RX delay register is used as a module of the receiver to report the maximum target delay, and the minimum RX delay register is used as a module of the receiver to report the minimum target delay. In other words, when the first module corresponds to the receiver, the first module may report the maximum target delay to the second module via the maximum RX delay register of the inner FEC, and report the minimum target delay to the second module via the minimum RX delay register of the inner FEC.

In a possible implementation, the first module may report the maximum target delay and/or the minimum target delay to the second module via an existing register. In this manner, the existing register may still be used to report the target delay.

In a specific example, if the first module corresponds to the transmitter, the first module may report the maximum target delay to the second module via a maximum TX delay register of a physical medium attachment (physical medium attachment, PMA)/physical media dependent (physical media dependent, PMD). Similarly, the first module may report the minimum target delay to the second module via a minimum TX delay register of the PMA/PMD.

In another specific example, if the first module corresponds to the receiver, the first module may report the maximum target delay to the second module via a maximum RX delay register of a PMA/PMD. Similarly, the first module may report the minimum target delay to the second module via a minimum RX delay register of the PMA/PMD.

In a possible implementation, the second submodule may be a submodule other than the first submodule in the first module.

In a possible implementation, if the first module corresponds to the transmitter, the second submodule may be, for example, a submodule in an inner FEC module that performs operations such as convolutional interleaving, distribution, and modulation encoding. If the first module corresponds to the receiver, the second submodule may be, for example, a submodule in an inner FEC module that performs inverse convolutional deinterleaving, multiplexing, and modulation decoding operations.

In a possible implementation, during specific implementation of determining the first delay of the target data passing through the second submodule in the first module, the first delay that is preset may be obtained. The first delay may be a value determined by the first module in a design phase, and the value of the first delay is related to the performance of the first module.

In a possible implementation, during specific implementation of determining the first delay of the target data passing through the second submodule in the first module, statistics on the delay of the target data passing through the second submodule may be collected, so as to obtain the first delay.

In a possible implementation, during specific implementation of collecting statistics on the delay of the target data passing through the second submodule, statistics on a delay of at least one bit of the target data that passes through the second submodule may be collected, so as to obtain the first delay. For example, the target data may be sampled, and statistics on a delay of data obtained through sampling and passing through the second submodule is collected. For another example, statistics on a delay of each bit of the target data that passes through the second submodule may be collected, so as to obtain the first delay.

In a possible implementation, the first module further includes a third submodule, and the first module may further determine a second delay of the target data passing through the third submodule in the first module. In a scenario in which the first module determines the second delay, during specific implementation of reporting the delay information to the second module, the first module may report the delay information to the second module based on the delay jitter value and the second delay, to improve accuracy.

In a possible implementation, the third submodule may be another submodule in the first module, different from the first submodule and the second submodule. For example, the third submodule may include a PMA submodule and a PMD submodule.

In a possible implementation, the second module includes a media access control MAC layer module. In a possible implementation, the delay jitter value may be a preset fixed value. For example, when the first module is an optical module, the delay jitter value may include a sum of a first jitter value and a second jitter value, where the first jitter value may be a delay jitter value introduced by parity sequence addition or deletion, and data flow interleaving or deinterleaving, and the second jitter value may be a delay jitter value introduced by pad addition or deletion. The fixed value may be, for example, a value between 4.6 ns and 4.8 ns.

In a possible implementation, the first submodule includes a submodule with a delay jitter caused by parity sequence addition or deletion, or padding sequence addition or deletion. In a specific example, for the transmitter, the first submodule may include: a submodule with a delay jitter caused by parity sequence addition, and a submodule with a delay jitter caused by padding sequence addition. Correspondingly, for the receiver, the first submodule may include: a submodule with a delay jitter caused by parity sequence deletion, and a submodule with a delay jitter caused by padding sequence deletion.

In a possible implementation, the first submodule includes a submodule with a delay jitter caused by data flow interleaving or deinterleaving. In a specific example, for the transmitter, the first submodule may include a submodule with a delay jitter caused by data flow interleaving. Correspondingly, for the receiver, the first submodule may include a submodule with a delay jitter caused by data flow deinterleaving.

In a possible implementation, the submodule with the delay jitter caused by parity sequence addition may be a submodule in an inner FEC module that performs inner FEC encoding; the submodule with the delay jitter caused by padding sequence addition may be a submodule in the inner FEC module that performs a padding sequence addition operation; the submodule with the delay jitter caused by data flow interleaving may be a submodule in the inner FEC module that performs data flow interleaving. In other words, the first submodule may include a submodule in the inner FEC module that performs inner FEC encoding, data flow interleaving, and padding sequence addition.

In a possible implementation, the submodule with the delay jitter caused by parity sequence deletion may be a submodule in an inner FEC module that performs inner FEC decoding; the submodule with the delay jitter caused by padding sequence deletion may be a submodule in the inner FEC module that performs a padding sequence deletion operation; the submodule with the delay jitter caused by data flow deinterleaving may be a submodule in the inner FEC module that performs data flow deinterleaving. In other words, the first submodule may include a submodule in the inner FEC module that performs inner FEC decoding, data flow deinterleaving, and padding sequence deletion.

In a possible implementation, both the transmitter and the receiver may perform a cyclic shift operation. In an example, if a shift direction corresponding to the cyclic shift operation performed by the receiver is the same as a shift direction corresponding to the cyclic shift operation performed by the transmitter, the first submodule may include a cyclic shift submodule that performs the cyclic shift operation. In this scenario, a delay jitter value introduced by the cyclic shift submodule may be 4.5 nanoseconds.

In a possible implementation, when the first submodule further includes the cyclic shift submodule, the delay jitter value may be the sum of the first jitter value and the second jitter value further plus a delay jitter of 4.5 ns introduced by the cyclic shift submodule. Because the sum of the first jitter value and the second jitter value is between 4.6 ns and 4.8 ns, the delay jitter value may be between (4.5 ns+4.6 ns=9.1 ns) and (4.5 ns+4.8 ns=9.3 ns).

In a possible implementation, the target data may correspond to data included in one periodicity of the specific locations in the first aspect. For example, the target data includes 8712*N data blocks or 8704*N data blocks, where N is a positive integer.

In a possible implementation, the data block includes 128 bits or 120 bits.

In a possible implementation, the target data includes 1115136*N bits, 1114112*N bits, 1044480*N bits, or 1045440*N bits, where N is a positive integer.

According to a third aspect, an embodiment of this application provides a delay reporting apparatus. The apparatus includes: a sending unit, configured to report a target delay corresponding to data at a plurality of specific locations in a data flow, where the plurality of specific locations are separated by a fixed length, and a periodicity of the plurality of specific locations corresponds to a periodicity of inserting a padding sequence into the data flow.

In a possible implementation, the periodicity of the plurality of specific locations is an integer multiple of 8712 data blocks, the periodicity of the plurality of specific locations is an integer multiple of 8704 data blocks, the periodicity of the plurality of specific locations is an integer multiple of 64 data blocks, or the periodicity of the plurality of specific locations is an integer multiple of 65 data blocks.

In a possible implementation, the data block includes 128 bits, 120 bits, or 4 bits.

In a possible implementation, the periodicity of the plurality of specific locations is an integer multiple of any one of the following values: 1115136 bits, 1114112 bits, 1044480 bits, or 1045440 bits.

In a possible implementation, the specific location is a start location of an FEC codeword, and the start location is a 1^{st} bit, a 1^{st} symbol, or a 1^{st} byte of the FEC codeword.

In a possible implementation, the FEC codeword includes an inner FEC codeword.

In a possible implementation, the data flow is a data flow obtained through inner FEC encoding, or the data flow is a data flow obtained through inner FEC decoding.

In a possible implementation, the periodicity of inserting the padding sequence into the data flow is an integer multiple of a periodicity of inserting a parity sequence into the data flow.

In a possible implementation, the target delay corresponds to a delay of the data passing through an optical module, or the target delay corresponds to a delay of the data passing through an inner FEC layer in the optical module.

In a possible implementation, the apparatus further includes a processing unit, configured to measure a first delay corresponding to data at each of the plurality of specific locations to obtain a plurality of first delays, where the target delay includes a maximum value and/or a minimum value among the plurality of first delays.

In a possible implementation, the sending unit is configured to: report the maximum value via a maximum TX delay register of an inner FEC; and/or report the minimum value via a minimum TX delay register of the inner FEC.

In a possible implementation, the sending unit is configured to: report the maximum value via a maximum TX delay register of a physical medium attachment PMA/physical media dependent PMD; and/or report the minimum value via a minimum TX delay register of the PMA/PMD.

In a possible implementation, the sending unit is configured to: report the maximum value via a maximum RX delay register of an inner FEC; and/or report the minimum value via a minimum RX delay register of the inner FEC.

In a possible implementation, the sending unit is configured to: report the maximum value via a maximum RX delay register of a PMA/PMD; and/or report the minimum value via a minimum RX delay register of the PMA/PMD.

In a possible implementation, the sending unit is configured to report, to a media access control MAC layer, the target delay corresponding to the data at the plurality of specific locations in the data flow.

In a possible implementation, the apparatus is used in an optical module or a physical PHY layer chip.

In a possible implementation, the optical module includes an inner FEC module, and the inner FEC module includes an inner FEC encoding module and/or an inner FEC decoding module.

In a possible implementation, the specific location is a start location of a data block immediately after the padding sequence is inserted into the data flow, and the start location is a 1^{st} bit, a 1^{st} symbol, or a 1^{st} byte of that data block.

According to a fourth aspect, an embodiment of this application provides a delay reporting apparatus, used in a first module. The apparatus includes: a processing unit, configured to obtain a delay jitter value of target data passing through a first submodule in the first module, where the first submodule includes a submodule with a fixed delay jitter, the target data is data sent by the first module or data received by the first module, and the delay jitter value is the preset fixed value; and a sending unit, configured to report delay information to a second module based on the delay jitter value.

In a possible implementation, the processing unit is further configured to determine a first delay of the target data passing through a second submodule in the first module; and the sending unit is configured to report the delay information to the second module based on the delay jitter value and the first delay.

In a possible implementation, the sending unit is configured to report, to the second module, a target delay obtained based on the delay jitter value and the first delay.

In a possible implementation, the target delay includes: a sum of the delay jitter value and the first delay; or a difference between the first delay and the delay jitter value.

In a possible implementation, the first delay includes a maximum delay and a minimum delay of the target data passing through the second submodule; and correspondingly, the target delay includes: a maximum target delay obtained based on the maximum delay and the delay jitter value, and a minimum target delay obtained based on the minimum delay and the delay jitter value.

In a possible implementation, if the target data is the data sent by the first module, the sending unit is configured to: report the maximum target delay to the second module via a maximum TX delay register of an inner forward error correction FEC; and report the minimum target delay to the second module via a minimum TX delay register of the inner FEC.

In a possible implementation, if the target data is the data sent by the first module, the sending unit is configured to: report the maximum target delay to the second module via a maximum TX delay register of a physical medium attachment PMA/physical media dependent PMD; and report the minimum target delay to the second module via a minimum TX delay register of the PMA/PMD.

In a possible implementation, if the target data is the data received by the first module, the sending unit is configured to: report the maximum target delay to the second module via a maximum RX delay register of an inner FEC; and report the minimum target delay to the second module via a minimum RX delay register of the inner FEC.

In a possible implementation, if the target data is the data received by the first module, the sending unit is configured to: report the maximum target delay to the second module via a maximum RX delay register of a PMA/PMD; and report the minimum target delay to the second module via a minimum RX delay register of the PMA/PMD.

In a possible implementation, the second submodule includes a submodule other than the first submodule.

In a possible implementation, the second submodule includes: a submodule in an inner FEC module that performs convolutional interleaving, distribution, and modulation encoding operations; or a submodule in an inner FEC module that performs inverse convolutional deinterleaving, multiplexing, and modulation decoding operations.

In a possible implementation, the processing unit is configured to obtain the first delay that is preset.

In a possible implementation, the processing unit is configured to collect statistics on the first delay of the target data passing through the second submodule.

In a possible implementation, collecting statistics on the first delay of the target data passing through the second submodule includes: collecting statistics on a delay of at least one bit of the target data that passes through the second submodule to obtain the first delay.

In a possible implementation, the processing unit is further configured to determine a second delay of the target data passing through a third submodule in the first module; and the sending unit is configured to report the delay information to the second module based on the delay jitter value and the second delay.

In a possible implementation, the third submodule includes a PMA submodule and/or a PMD submodule.

In a possible implementation, the second module includes a media access control MAC layer module.

In a possible implementation, the fixed value is between 4.6 nanoseconds and 4.8 nanoseconds, or the fixed value is 4.5 nanoseconds, or the fixed value is between 9.1 nanoseconds and 9.3 nanoseconds.

In a possible implementation, the first submodule includes a cyclic shift submodule.

In a possible implementation, the first submodule includes a submodule with a delay jitter caused by parity sequence addition or deletion, or padding sequence addition or deletion.

In a possible implementation, the first submodule includes a submodule with a delay jitter caused by data flow interleaving or deinterleaving.

In a possible implementation, the first submodule includes: a submodule in the inner FEC module that performs inner FEC encoding, data flow interleaving, and padding sequence addition operations; or a submodule in the inner FEC module that performs inner FEC decoding, data flow deinterleaving, and padding sequence deletion operations.

In a possible implementation, the target data includes 8712*N data blocks or 8704*N data blocks, where N is a positive integer.

In a possible implementation, the data block includes 128 bits or 120 bits.

In a possible implementation, the target data includes 1115136*N bits, 1114112*N bits, 1044480*N bits, or 1045440*N bits, where N is a positive integer.

According to a fifth aspect, an embodiment of this application provides a device. The device includes a processor. The processor is configured to perform the method according to any one of the first aspect and the possible implementations of the first aspect. Alternatively, the processor is configured to execute instructions or a computer program in a memory, to perform the method according to any one of the second aspect and the possible implementations of the second aspect.

In a possible implementation, the device further includes the memory. The memory is configured to store the instructions or the computer program. The processor is configured to execute the instructions or the computer program stored in the memory, triggering the execution of the method according to any one of the first aspect and the possible implementations of the first aspect; or the processor is configured to execute the instructions or the computer program stored in the memory, to perform the method according to any one of the second aspect and the possible implementations of the second aspect.

According to a sixth aspect, an embodiment of this application provides a device, including an interface circuit and a processing circuit. The interface circuit is configured to receive and/or send data, and the processing circuit is configured to process data.

In an example, the device may be configured to perform the method according to any one of the first aspect. In this case:

The interface circuit is configured to report a target delay corresponding to data at a plurality of specific locations in a data flow, where the plurality of specific locations are separated by a fixed length, and a periodicity of the plurality of specific locations corresponds to a periodicity of inserting a padding sequence into the data flow.

In an example, the processing circuit is configured to measure a first delay corresponding to data at each of the plurality of specific locations to obtain a plurality of first delays, where the target delay includes a maximum value and/or a minimum value among the plurality of first delays.

In another example, the device may be configured to perform the method according to any one of the second aspect. In this case:

The processing circuit is configured to obtain a delay jitter value of target data passing through a first submodule in the first module, where the first submodule includes a submodule with a fixed delay jitter, the target data is data sent by the first module or data received by the first module, and the delay jitter value is the preset fixed value; and the interface circuit is configured to report delay information to a second module based on the delay jitter value.

According to a seventh aspect, an embodiment of this application provides a computer-readable storage medium, including instructions or a computer program. When the instructions or the computer program are/is run on a computer, the computer is caused to perform the method according to any one of the first aspect or the implementations of the first aspect; when the instructions or the computer program are/is run on a computer, the computer is caused to perform the method according to any one of the second aspect or the implementations of the second aspect.

According to an eighth aspect, an embodiment of this application provides a computer program product including instructions or a computer program. When the computer program product runs on a computer, the computer is caused to perform the method according to any one of the first aspect or the implementations of the first aspect, or the computer is caused to perform the method according to any one of the second aspect or the implementations of the second aspect.

According to a ninth aspect, an embodiment of this application provides a chip, including an interface circuit and a processing circuit. The chip is configured to perform the method according to any one of the first aspect or the implementations of the first aspect, or the method according to any one of the second aspect or the implementations of the second aspect.

According to a tenth aspect, an embodiment of this application provides an optical module, including an interface circuit and a processing circuit. The optical module is configured to perform the method according to any one of the first aspect or the implementations of the first aspect, or the method according to any one of the second aspect or the implementations of the second aspect.

### BRIEF DESCRIPTION OF DRAWINGS

To describe the technical solutions in embodiments of this application or the conventional technology more clearly, the following briefly describes the accompanying drawings for describing embodiments or the conventional technology. It is clear that, the accompanying drawings in the following descriptions show only some embodiments recorded in this application, and a person of ordinary skill in the art may still derive other drawings from these accompanying drawings without creative efforts.
FIG. 1a is a diagram of a structure of a communication apparatus according to an embodiment of this application;
FIG. 1b is a diagram of a structure of another communication apparatus according to an embodiment of this application;
FIG. 1c is a diagram of delays introduced by FEC functions according to an embodiment of this application;
FIG. 1d is a diagram of a structure of another communication apparatus according to an embodiment of this application;
FIG. 1e is a diagram of delays introduced by inner FEC functions according to an embodiment of this application;
FIG. 1f is a diagram of other delays introduced by inner FEC functions according to an embodiment of this application;
FIG. 1g is a diagram of other delays introduced by inner FEC functions according to an embodiment of this application;
FIG. 1h is a diagram of delays introduced by inner FEC functions according to an embodiment of this application;
FIG. 2 is a schematic flowchart of a delay reporting method according to an embodiment of this application;
FIG. 3 is a diagram of a structure of a first module according to an embodiment of this application;
FIG. 4 is a schematic flowchart of another delay reporting method according to an embodiment of this application;
FIG. 5 is a diagram of a processing process of an inner FEC according to an embodiment of this application;
FIG. 6 is a diagram of a structure of a delay reporting apparatus according to an embodiment of this application;
FIG. 7 is a diagram of a structure of another delay reporting apparatus according to an embodiment of this application;
FIG. 8 is a diagram of a structure of a device according to an embodiment of this application;
FIG. 9 is a diagram of a structure of a device according to an embodiment of this application; and
FIG. 10 is a diagram of a structure of a chip or an optical module according to an embodiment of this application.

### DESCRIPTION OF EMBODIMENTS

Embodiments of this application provide a delay reporting method and apparatus, enabling accurate reporting of delays.

For ease of understanding, an application scenario of reporting the delay is first described.

In a time synchronization scenario, time synchronization may be performed between communication apparatuses by exchanging a packet. The communication apparatus described in embodiments of this application may be a network device like a switch, a router, a slicing packet network (slicing packet network, SPN) device, or an optical transmission network (optical transmission network, OTN) device, may be a part of components on the network device, for example, a board, a line card, or an interface on the network device, may be a functional module on the network device, may be a chip, may be a pluggable optical module on the network device, or may be a server, a network interface card on the server, a network interface card on another device, or the like. This is not specifically limited in embodiments of this application. The communication apparatuses may be directly connected, for example, but not limited to, through an Ethernet cable or an optical cable.

A 1588 protocol is a high-precision time synchronization protocol. The 1588 protocol may provide nanosecond (nanosecond, ns)-class time synchronization precision. Currently, the international telecommunication union (international telecommunication union-telecommunication, ITU-T) G.8273.2 defines four classes (classes) of time synchronization precision requirements: class A, class B, class C, and class D. Time precision corresponding to class A is ±100 ns. Time precision corresponding to class B is ±70 ns. Time precision corresponding to class C is ±30 ns. Time precision corresponding to class D is ±5 ns. Therefore, in an example, the time synchronization may be performed between the communication apparatuses by exchanging a 1588 packet. The 1588 packet described herein may be understood as a packet that complies with the 1588 protocol.

During specific implementation of performing time synchronization between the communication apparatuses by exchanging the 1588 packet, a communication apparatus sending the 1588 packet may add a sending timestamp to the 1588 packet, where the sending timestamp indicates a sending time of the 1588 packet. Correspondingly, a communication apparatus receiving the 1588 packet records a receiving timestamp of the 1588 packet, where the receiving timestamp indicates a receiving time of the 1588 packet. Further, the communication apparatus receiving the 1588 packet may perform the time synchronization based on the sending timestamp and the receiving timestamp. Because the sending timestamp and the receiving timestamp are input parameters for time synchronization, the accuracy of the sending timestamp and the receiving timestamp directly affects the precision of time synchronization. In other words, it is particularly important to ensure the accuracy of the sending timestamp and the receiving timestamp.

Currently, the communication apparatus records the timestamp at the MAC layer. In a specific scenario, for a communication apparatus including an Ethernet interface, a MAC layer of the communication apparatus may record the timestamp.

The following describes, with reference to a structure of the communication apparatus, the manner in which the communication apparatus records the timestamp.

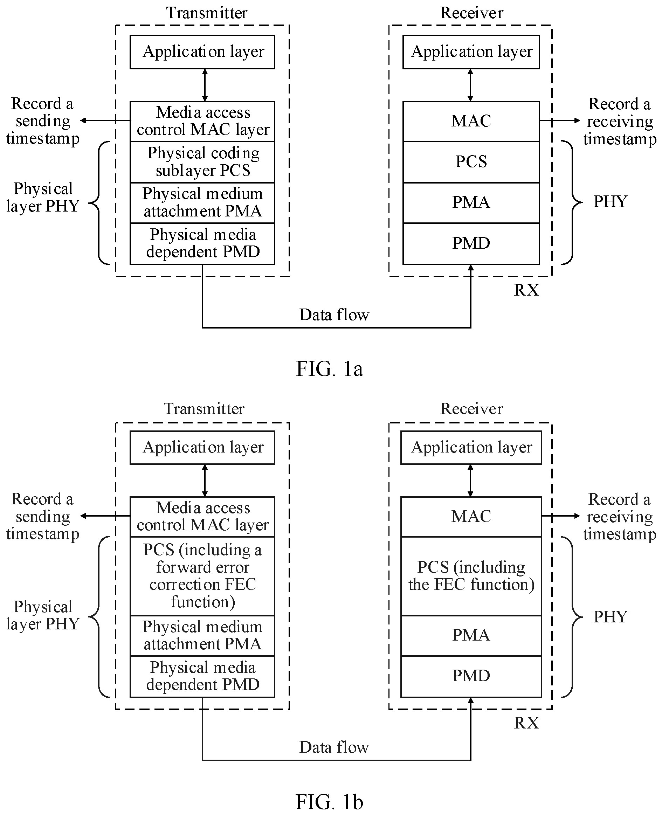

FIG. 1a is a diagram of a structure of a communication apparatus according to an embodiment of this application, where a structure of a communication apparatus functioning as a transmitter and a structure of a communication apparatus functioning as a receiver are included.

As shown in FIG. 1a, the communication apparatus functioning as the transmitter and the communication apparatus functioning as the receiver each may include a MAC layer and a physical layer, and the physical layer may include a PCS, a PMA, and a PMD. In addition, the communication apparatus may further include an application layer. For example, the application layer may correspond to an upper-layer service.

The MAC layer of the communication apparatus functioning as the transmitter may generate a MAC frame and send the MAC frame to the physical layer. For example, the MAC layer may receive data sent by an upstream device or an upper-layer service, and may encapsulate the data to form a MAC frame. For another example, if the MAC layer does not receive data sent by an upstream device or an upper-layer service, the MAC layer generates a corresponding MAC frame based on an idle (IDLE) code stream.

The MAC layer at the transmitter sends the MAC frame to the physical layer at the transmitter. The physical layer may include the PCS, the PMA, and the PMD. The MAC layer at the transmitter may record a timestamp at which the MAC layer sends the MAC frame to the physical layer as the foregoing sending timestamp.

The PCS may process a received data flow, and send processed data to the PMA. The data flow described herein may be a bit stream of a plurality of bits, and the data flow may be obtained by processing the MAC frame.

The PMA may modulate the data from the PCS into a signal that can be transmitted on a channel.

The PMD is a signal transmitter, and is configured to transmit, through a transmission medium, the signal obtained through PMA modulation.

The physical layer at the receiver receives the signal transmitted through the foregoing transmission medium, processes the signal, and then transfers a processed signal to the MAC layer at the receiver. As described above, the physical layer at the receiver also includes the PMD, the PMA, and the PCS.

The PMD at the receiver first receives the signal transmitted through the transmission medium. Then, the PMA demodulates the signal. Data obtained through PMA demodulation is transferred to the PCS, and the PCS performs a corresponding operation on the received data. The operation performed by the PCS at the receiver is an inverse operation of an operation performed by the PCS at the transmitter. Further, the PCS may send a data flow obtained through processing to the MAC layer. In this case, after receiving the data flow sent by the PCS, the MAC layer at the receiver may obtain the MAC frame sent by the transmitter, and further process the MAC frame, for example, parse the MAC frame and send the MAC frame to the upstream device or the upper-layer service. When the MAC at the receiver receives the data flow obtained through PCS processing, the MAC layer at the receiver may record a timestamp at which the MAC layer receives the data flow as a receiving timestamp.

To support high-precision time synchronization of 1588 protocol, the physical layer of the communication apparatus may report, to the MAC layer, a delay of the data flow passing through the physical layer, so that when recording a timestamp, the MAC layer compensates for the recorded timestamps based on the delay of the data flow passing through the physical layer. In this way, the timestamp is more accurate after MAC layer compensation. Details are as follows:

For the transmitter, the MAC layer may add, to the timestamp recorded by the MAC layer, the delay of the data flow passing through the physical layer, to obtain the sending timestamp. Clearly, the sending timestamp may be considered as a timestamp at which the physical layer at the transmitter actually sends the data flow.

For the receiver, the MAC layer may subtract, from the timestamp recorded by the MAC layer, the delay of the data flow passing through the physical layer, to obtain the receiving timestamp. It is not difficult to understand that the receiving timestamp may be considered as a timestamp at which the physical layer at the receiver actually receives the data flow.

It can be learned from the foregoing descriptions that the data flow transmitted at the physical layer is a bit stream of a plurality of bits. The physical layer cannot identify a part in the bit stream corresponding to the 1588 packet. Therefore, the physical layer cannot accurately collect statistics on a delay for the 1588 packet. To resolve this problem, in some scenarios, stability of the delay at the physical layer needs to be ensured. That is, the delay of the data flow passing through the physical layer is stable around a fixed value. In this way, the physical layer may report the fixed value to the MAC layer, and correspondingly, the MAC layer may compensate for a timestamp based on the fixed value.

However, for some communication apparatuses, for example, a communication apparatus including a 100GE Ethernet interface, a PCS at a physical layer of the communication apparatus includes an FEC function, and the FEC function of the PCS enables a parity bit (parity bit) addition/deletion operation and a data flow interleaving/deinterleaving operation. The parity bit addition/deletion operation and the data flow interleaving/deinterleaving operation each introduce a delay jitter. Consequently, a delay of a data flow passing through the physical layer is unstable. In embodiments of this application, a parity bit may also be referred to as a parity sequence, and the two terms may be used interchangeably.

It should be noted that any communication apparatus may be used as both a transmitter and a receiver. In other words, the transmitter and receiver roles shown in FIG. 1a may be swapped. If the transmitter and receiver roles shown in FIG. 1a are swapped, the flow direction of the data flow correspondingly changes, that is, from the new transmitter to the new receiver.

FIG. 1b is a diagram of a structure of another communication apparatus according to an embodiment of this application. The structure of the communication apparatus shown in FIG. 1b is basically the same as the structure of the communication apparatus shown in FIG. 1a, and a difference lies in that a PCS of the communication apparatus shown in FIG. 1b includes an FEC function.

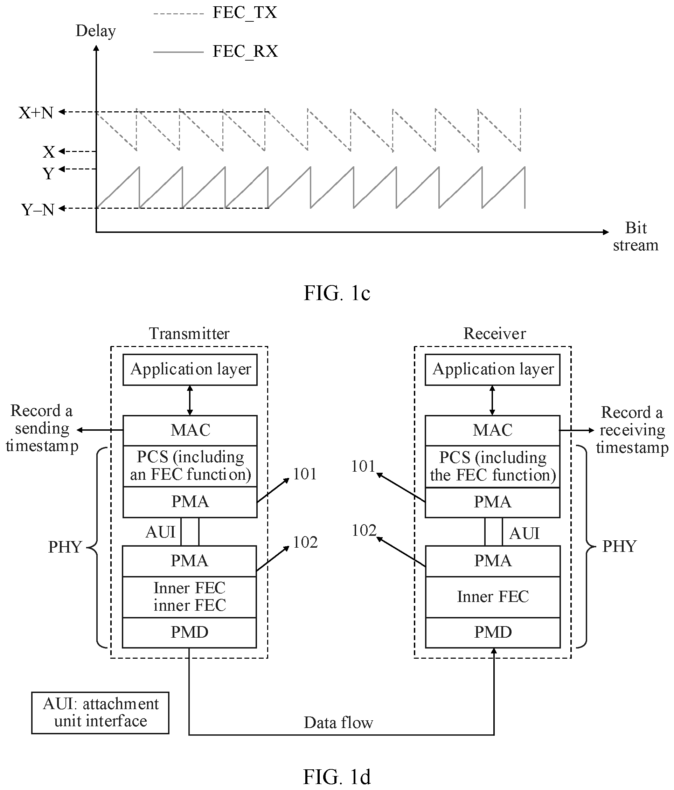

For the communication apparatus shown in FIG. 1b, a sum of delays introduced by an FEC function of a transmitter and an FEC function of a receiver is fixed. For example, a PCS at the transmitter performs FEC encoding. The encoding process includes parity bit addition, and correspondingly, a corresponding delay jitter is introduced. In addition, the transmitter further performs a data flow interleaving operation, and the data flow interleaving operation also introduces a specific delay jitter. Similarly, a PCS at the receiver performs FEC decoding. The decoding process includes parity bit deletion, and correspondingly, a corresponding delay jitter is introduced. In addition, the receiver further performs a data flow deinterleaving operation, and the data flow deinterleaving operation also introduces a specific delay jitter. For ease of description, the delay generated when the transmitter implements the FEC function is referred to as an FEC_TX delay, and the delay generated when the receiver implements the FEC function is referred to as an FEC_RX delay. In this case, the FEC_TX delay and the FEC_RX delay may be shown in FIG. 1c. FIG. 1c is a diagram of delays introduced by FEC functions according to an embodiment of this application. As shown in FIG. 1c, a horizontal coordinate represents a bit stream passing through a PCS module, and a vertical coordinate represents a delay.

In an example, an FEC function of a PCS may also be referred to as an outer FEC function, and an FEC codeword obtained by performing FEC encoding by a PCS at a transmitter may be referred to as an outer FEC codeword.

In addition, it is defined in the current IEEE 802.3dj task force (task force) (B400G standard) that a physical layer supports a cascaded coding function. Specifically, an inner FEC is inserted between a PMA and a PMD for inner FEC encoding and decoding. In an example, an FEC codeword obtained by performing inner FEC encoding by an inner FEC at the transmitter may be referred to as an inner FEC codeword.

Refer to FIG. 1d for understanding. FIG. 1d is a diagram of a structure of another communication apparatus according to an embodiment of this application. As shown in FIG. 1d, a physical layer of the communication apparatus supporting cascaded coding includes: a PCS supporting an FEC function, a PMA 101, a PMA 102, an inner FEC, and a PMD. The PMA 101 and the PMA 102 interact with each other through an attachment unit interface (attachment unit interface, AUI).

The PCS and the PMA 101 may belong to a first chip, and the PMA 102, the inner FEC, and the PMD may belong to an optical module.

Because the inner FEC needs to perform an inner-code operation, and performing the inner-code operation also introduces a delay jitter. Unlike the outer FEC function, an inner FEC function also performs a pad addition/deletion operation.

In an example, for a transmitter, operations performed by an inner FEC include encoding, interleaving, and padding sequence (pad) addition. For a receiver, operations performed by an inner FEC include pad deletion, deinterleaving, and decoding. In an example, the encoding may be, for example, inserting an 8-bit parity bit for every 120-bit information bits, or referred to as message bits, and the interleaving may be, for example, 8:1 codeword interleaving. For example, the padding may be padding 1024-bit data every 8704 inner code blocks (where each inner code block is 128 bits). In other words, a pad of eight inner code blocks in length is inserted every 8704 inner code blocks. In addition, after performing the pad addition operation, the transmitter may perform four-level pulse amplitude modulation (pulse amplitude modulation 4, PAM4) encoding on an obtained data flow, that is, two bits in the data flow may be used as a symbol obtained through PAM4 encoding.

In another example, for the transmitter, operations performed by the inner FEC include convolutional interleaving, BCH (Bose Chaudhuri Hocquenghem) encoding, and padding sequence (pad) addition. For the receiver, operations performed by the inner FEC of the receiver are inverse operations of inner FEC operations performed by the transmitter, and may specifically include pad deletion, BCH decoding, and inverse convolutional interleaving.

For example, the convolutional interleaving operation may be sending every 40-bit data to N delay lines (lines) in a round-robin manner. For example, there are three delay lines: a 0^{th} delay line, a 1^{st} delay line, and a 2^{nd} delay line. On the 0^{th} delay line, a delay operation is not performed on the data; on the 1^{st} delay line, every 40-bit data is delayed by a time length corresponding to 6*40 bits; and on the 2^{nd} delay line, every 40-bit data is delayed by a time length corresponding to 12*40 bits. The inverse convolutional interleaving is an inverse process of the convolutional interleaving. In an inverse convolutional interleaving process, on the 2^{nd} delay line, the delay operation is not performed on the data; on the 1^{st} delay line, every 40-bit data is delayed by the time length corresponding to 6*40 bits; and on the 0^{th} delay line, every 40-bit data is delayed by the time length corresponding to 12*40 bits.

For example, the BCH encoding may be inserting 16-bit parity bits for every 110-bit information bits. Correspondingly, the BCH decoding deletes 16-bit parity bits from every 126-bit encoded information to obtain 110-bit information bits.

The pad addition may be inserting a 4-bit pilot (pilot) every 64 4-bit data blocks. In other words, in this scenario, the pad may be the pilot. Correspondingly, the pad deletion deletes a 4-bit pilot from every 65 4-bit data blocks (that is, delete one of the data blocks used as the pilot) to obtain 64 4-bit data blocks.

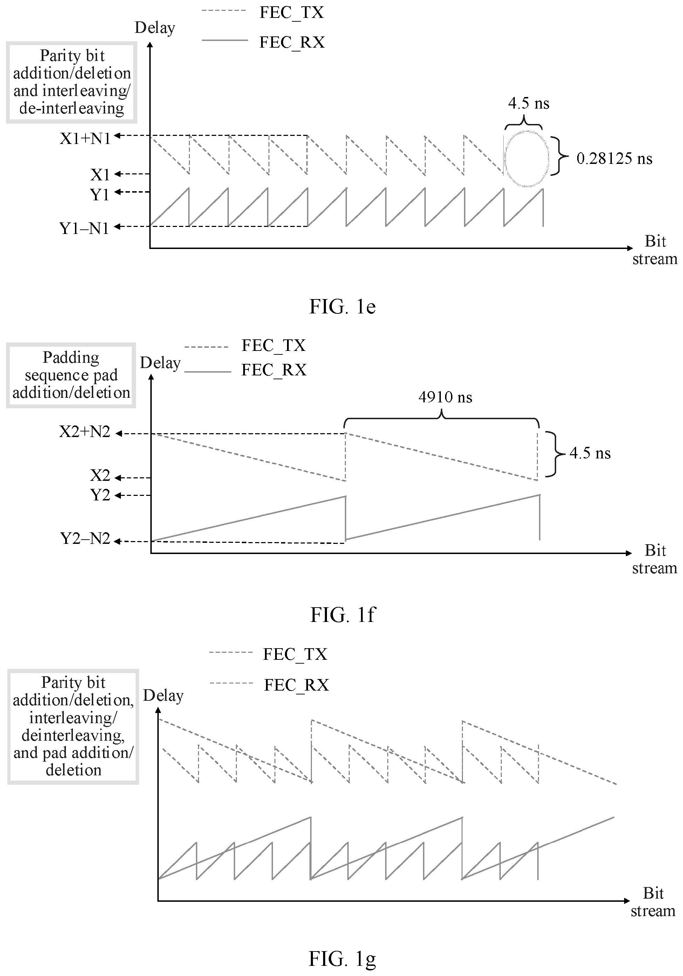

For the transmitter, two sub-functions of parity bit addition and interleaving included in the encoding process introduce a delay jitter. Correspondingly, for the receiver, two sub-functions of parity bit deletion and deinterleaving that are included in a decoding process also introduce a delay jitter. As a result, an FEC_TX delay and an FEC_RX delay each introduce a sawtooth delay jitter. A sawtooth periodicity is about 4.5 ns (1024/113.4375G/2), and a sawtooth amplitude is about 0.28125 ns (64/113.4375G/2). Refer to FIG. 1e for understanding. FIG. 1e is a diagram of delays introduced by inner FEC functions according to an embodiment of this application. In an example, one periodicity of a sawtooth shown in FIG. 1e may include eight inner FEC codewords.

In the formula 1024/113.4375G/2:
1024 corresponds to a quantity of bits included in eight inner FEC codewords, and one inner FEC codeword includes 128 bits.

113.4375G corresponds to a baud rate of a single physical lane (lane).

2 indicates that in a scenario in which PAM4 encoding is performed on a data flow, one symbol includes two bits.

In the formula 64/113.4375G/2:
64 indicates that in 8:1 codeword interleaving, a 1^{st} bit of a 9^{th} virtual lane is located in a 65^{th} bit of interleaved data, and can be sent only after first 64 bits are sent.

113.4375G corresponds to the baud rate of the single physical lane.

2 indicates that one symbol includes two bits.

In addition, for a transmitter, a pad addition sub-function introduces a delay jitter. Correspondingly, for a receiver, a pad deletion sub-function also introduces a delay jitter. As a result, an FEC_TX delay and an FEC_RX delay also introduce sawtooth-shaped delay jitters. A sawtooth periodicity described herein is about 4910 ns (8704*128/113.4375G/2), and a sawtooth amplitude is about 4.5 ns (1024/113.4375G/2). Compared with the sawtooth introduced in the foregoing encoding process or decoding process, a sawtooth introduced by pad addition or deletion has a larger periodicity, and may be simply referred to as a large sawtooth. Correspondingly, the sawtooth introduced in the encoding or decoding process is referred to as a small sawtooth. Refer to FIG. 1f for understanding. FIG. 1f is a diagram of delays introduced by inner FEC functions according to an embodiment of this application. FIG. 1f shows a delay introduced by a padding operation of a transmitter and a delay introduced by a de-padding operation of a receiver. In other words, in a cascaded coding scenario, delay jitters caused by parity bit addition/deletion, interleaving/deinterleaving, and pad addition/deletion exist in the foregoing optical module. A periodicity of a sawtooth shown in FIG. 1f is an integer multiple of the periodicity of the sawtooth shown in FIG. 1e. Therefore, for a delay obtained by superimposing a delay (as shown in FIG. 1e) introduced by parity bit addition/deletion and interleaving/deinterleaving and a delay (as shown in FIG. 1f) caused by pad addition/deletion, refer to FIG. 1g for understanding. FIG. 1g is a diagram of other delays introduced by inner FEC functions according to an embodiment of this application.

In the formula 8704*128/113.4375G/2:
8704*128 identifies a quantity of bits included in 8704 inner FEC codewords.

113.4375G corresponds to the baud rate of the single physical lane.

2 indicates that one symbol includes two bits.

In the formula 1024/113.4375G/2:
1024 indicates that 1024-bit padding data is padded every 8704 inner code blocks.

113.4375G corresponds to the baud rate of the single physical lane.

2 indicates that one symbol includes two bits.

For a sawtooth shown in FIG. 1g, it should be noted that:
A small sawtooth corresponding to an FEC_TX delay and a small sawtooth corresponding to an FEC_RX delay have a same periodicity. In other words, a peak location of the small sawtooth corresponding to the FEC_TX delay overlaps a peak location of the small sawtooth corresponding to the FEC_RX delay, and a trough location of the small sawtooth corresponding to the FEC_TX delay overlaps a trough location of the small sawtooth corresponding to the FEC_RX delay. However, a quantity of data (for example, a quantity of bits) included in one periodicity of the small sawtooth corresponding to the FEC_TX delay may be the same as or different from a quantity of data included in one periodicity of the small sawtooth corresponding to the FEC_RX delay.

Similarly, a large sawtooth corresponding to the FEC_TX delay and a large sawtooth corresponding to the FEC_RX delay have a same periodicity. In other words, a peak location of the large sawtooth corresponding to the FEC_TX delay overlaps a peak location of the large sawtooth corresponding to the FEC_RX delay, and a trough location of the large sawtooth corresponding to the FEC_TX delay overlaps a trough location of the large sawtooth corresponding to the FEC_RX delay. However, a quantity of data (for example, a quantity of bits) included in one periodicity of the large sawtooth corresponding to the FEC_TX delay may be the same as or different from a quantity of data included in one periodicity of the large sawtooth corresponding to the FEC_RX delay.

In addition, for a transmitter:
In an example, one periodicity corresponding to the large sawtooth may include data blocks corresponding to 8704 inner FEC codewords, where one data block includes 120 information bits. After the transmitter performs inner FEC encoding, an 8-bit parity sequence is added to each data block. Therefore, it may also be considered that one periodicity may include 8704 data blocks, where one data block includes 128 bits. Further, after the transmitter performs a pad addition operation, a pad corresponding to a length of eight FEC codewords is inserted into one periodicity. That is, one periodicity may include 8712 data blocks, where one data block includes 128 bits. In other words, the data in one periodicity falls into three cases: 8704*120=1044480 bits, 8704*128=1114112 bits, or 8712*128=1115136 bits.

In another example, the data included in one periodicity may alternatively include 8712*120=1045440 bits.

A person skilled in the art can easily understand that the foregoing four lengths each may be considered as a periodicity corresponding to a large sawtooth.

After performing a pad addition operation on a data flow, the transmitter may send a padded data flow to a receiver.

For the receiver:
One periodicity corresponding to a large sawtooth may include data blocks corresponding to 8712 inner FEC codewords, where one data block includes 128 bits. The receiver may perform a pad deletion operation on the data blocks corresponding to the 8712 inner FEC codewords, to delete the pad inserted by the transmitter. After the receiver performs the pad deletion operation, one periodicity includes data blocks corresponding to 8704 inner FEC codewords, where one data block includes 128 bits. Further, the receiver may perform inner FEC decoding on the data blocks corresponding to the 8704 inner FEC codewords, deleting the 8-bit parity sequence in each data block. Therefore, after the receiver performs the inner FEC decoding, one periodicity may include 8704 data blocks, where one data block includes 120 bits. Therefore, for the receiver, data included in one periodicity may have the following three cases: 8712*128=1115136 bits, 8704*128=1114112 bits, or 8704*120=1044480 bits.

In another example, the data included in one periodicity may alternatively include 8712*120=1045440 bits.

For the delay jitter introduced by the FEC function or the inner FEC function described above, it is specified in the IEEE 802.3cx standard that: a delay reported by a transmitter is equivalent to a maximum delay, and a delay reported by a receiver is equivalent to a minimum delay. For example, in the scenario shown in FIG. 1c, a delay reported by the transmitter is X+N, and a delay reported by the receiver is Y-N.

However, the IEEE 802.3cx standard does not specify how the transmitter reports the maximum delay or the receiver reports the minimum delay in cascaded coding scenarios.

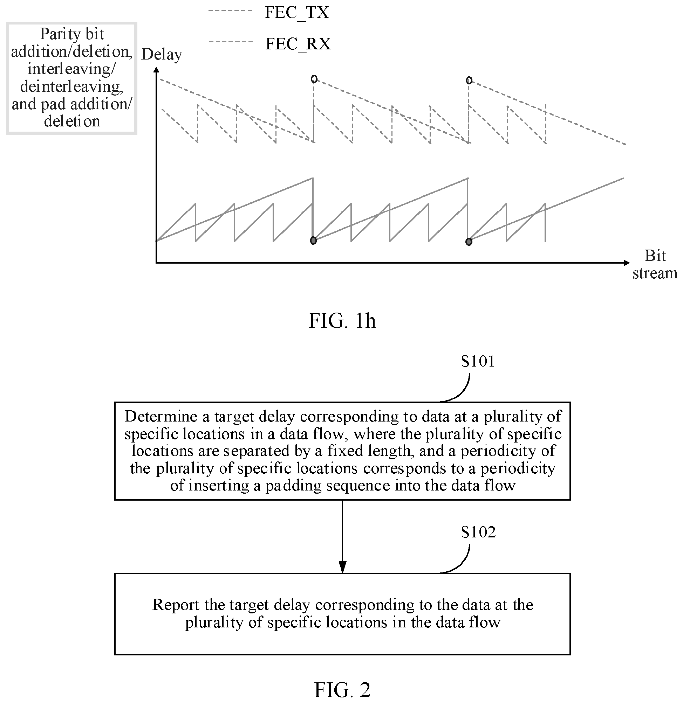

For the inner FEC function, factors introducing a delay jitter include parity bit addition/deletion, interleaving/deinterleaving, and pad addition/deletion. For the transmitter, an FEC_TX delay corresponding to a delay corresponding to data at a start location of a specific data block is equivalent to a maximum delay. Similarly, for the receiver, an FEC_RX delay corresponding to the delay corresponding to the data at the start location of the specific data block is equivalent to a minimum delay. Refer to FIG. 1h for understanding. FIG. 1h is a diagram of delays introduced by inner FEC functions according to an embodiment of this application. In FIG. 1h:

A delay corresponding to data corresponding to a location circled by a hollow circle is equivalent to a maximum delay. This is because parts circled by the hollow circles correspond to a maximum delay value introduced due to parity sequence addition/deletion and interleaving/deinterleaving, and a maximum delay value introduced due to padding sequence addition/deletion. The parity sequence addition/deletion described herein refers to parity sequence addition or deletion, and the padding sequence addition/deletion refers to padding sequence addition or deletion.

A delay corresponding to data corresponding to a location circled by a solid circle is equivalent to a minimum delay. This is because parts circled by the hollow circles correspond to a minimum delay value introduced due to parity sequence addition/deletion and interleaving/deinterleaving, and a minimum delay value introduced due to padding sequence addition/deletion.

The data at the location circled by the hollow circle is data at a start location of a specific data block. Correspondingly, the data at the location circled by the solid circle is also the data at the start location of the specific data block.

It can be learned from the above that a periodicity of a large sawtooth is an integer multiple of a periodicity of a small sawtooth. Therefore, a periodicity of the hollow circle shown in FIG. 1h corresponds to the periodicity of the large sawtooth.

It can be learned from the foregoing descriptions of FIG. 1g that, in the scenario shown in FIG. 1h:
In an example, one periodicity of the hollow circle includes 8704 data blocks, where one data block includes 120 bits. In another example, one periodicity of the hollow circle includes 8704 data blocks, where one data block includes 128 bits. In still another example, one periodicity of the hollow circle includes 8712 data blocks, where one data block includes 128 bits.

In an example, one periodicity of the solid circle includes 8712 data blocks, where one data block includes 128 bits. In another example, one periodicity of the solid circle includes 8704 data blocks, where one data block includes 128 bits. In still another example, one periodicity of the solid circle includes 8704 data blocks, where one data block includes 120 bits.

Data blocks may be numbered in sequence. Two adjacent circles separated by m data blocks may indicate a difference of m in block numbers. In this case, a periodicity of locations corresponding to the circles is also m. For example, that data blocks corresponding to two hollow circles are separated by 8712 data blocks may mean that a difference between numbers of the data blocks corresponding to the two hollow circles is 8712. Correspondingly, a periodicity of locations marked by the hollow circles is 8712.

In addition, IEEE 802.3cx clause 90 requires each layer of the physical layer to report a maximum delay and a minimum delay. Specifically, IEEE 802.3cx clause 90 defines registers used at each layer to report the maximum delay and the minimum delay. For example, IEEE 802.3cx clause 90 defines a maximum TX delay register of the PMA/PMD, a minimum TX delay register of the PMA/PMD, a maximum RX delay register of the PMA/PMD, and a minimum RX delay register of the PMA/PMD.

The maximum TX delay register of the PMA/PMD is configured to report a maximum delay of the PMA/PMD when the communication apparatus functions as a transmitter.

The minimum TX delay register of the PMA/PMD is configured to report a minimum delay of the PMA/PMD when the communication apparatus functions as the transmitter.

The maximum RX delay register of the PMA/PMD is configured to report a maximum delay of the PMA/PMD when the communication apparatus functions as a receiver.

The minimum RX delay register of the PMA/PMD is configured to report a minimum delay of the PMA/PMD when the communication apparatus functions as the receiver.

In view of this, embodiments of this application provide a delay reporting method, to accurately report a delay in a scenario in which a physical layer supports a cascaded coding function when "a delay reported by a transmitter is equivalent to a maximum delay, and a delay reported by a receiver is equivalent to a minimum delay" as specified in the IEEE 802.3cx standard.

The following describes, with reference to the accompanying drawings, the delay reporting method provided in embodiments of this application.

Before the delay reporting method provided in embodiments of this application is described, it should be noted that:
A communication apparatus may include a physical layer module, and the physical layer module is configured to implement functions implemented by the foregoing physical layer. The physical layer may include a plurality of submodules, and each submodule is configured to implement a specific physical layer function. For example, the physical layer module includes a PCS submodule, a PMA submodule, and a PMD submodule. The PCS submodule is configured to implement the function of the foregoing PCS, the PMA submodule is configured to implement the function of the foregoing PMA, and the PMD submodule is configured to implement the function of the foregoing PMD.

In addition, the communication apparatus may further include an optical module, and the optical module may also include a corresponding submodule, configured to implement a corresponding function. For example, for a communication apparatus whose structure is the structure shown in FIG. 1d, an optical module may include a PMA submodule, an inner FEC module, and a PMD submodule.

In addition, time synchronization is merely an application scenario provided in embodiments of this application, and the solutions in embodiments of this application may be further applied to another scenario. For example, in an in-band flow measurement scenario, the communication apparatus may determine a sending timestamp or a receiving timestamp of a packet according to the solutions in embodiments of this application. Application scenarios of embodiments of this application are not described one by one herein.

FIG. 2 is a schematic flowchart of a delay reporting method according to an embodiment of this application.

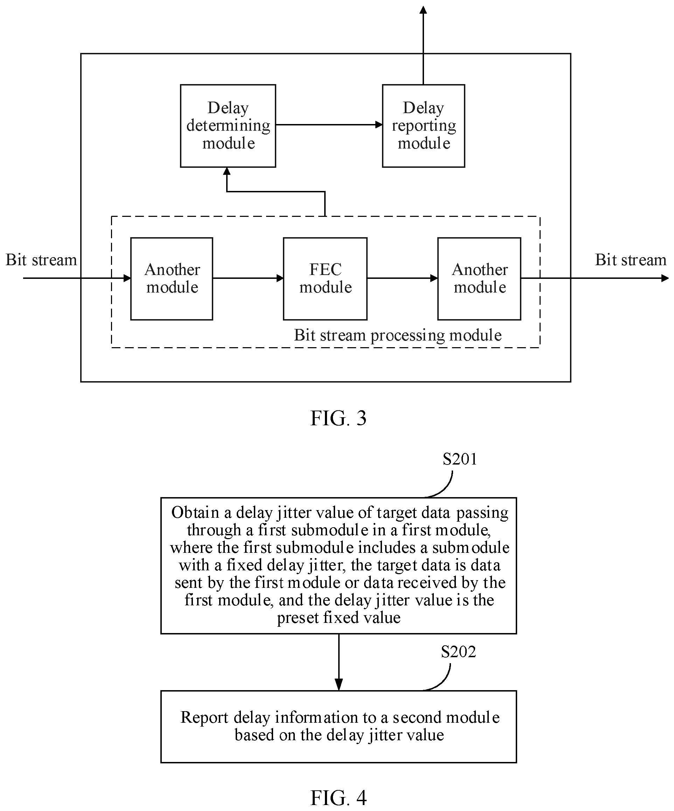

The delay reporting method shown in FIG. 2 may be applied to a first module. The first module may be a module in a communication apparatus. The communication apparatus described herein may be a communication apparatus functioning as a transmitter, or may be a communication apparatus functioning as a receiver. This is not specifically limited in this embodiment of this application. A structure of the first module may be shown in FIG. 3. FIG. 3 is a diagram of a structure of a first module according to an embodiment of this application. As shown in FIG. 3, the first module includes a bit stream processing module, a delay determining module, and a delay reporting module. The bit stream processing module may include an FEC module and another module that interacts with the FEC module. The delay determining module is configured to determine a delay. The delay reporting module is configured to report the determined delay to a second module.

In an example, the first module may be a PHY module or an optical module. In a specific example, a structure of a communication apparatus including the first module is the structure shown in FIG. 1d. In this case, the FEC module shown in FIG. 3 may be a module that implements an inner FEC function. The module that implements the inner FEC function may also be referred to as an "inner FEC module".

The PHY module described in this embodiment of this application may be, for example, a PHY chip configured to implement a PHY function.

The method shown in FIG. 2 may include S101 and S102 below.

S101: Determine a target delay corresponding to data at a plurality of specific locations in a data flow, where the plurality of specific locations are separated by a fixed length, and a periodicity of the plurality of specific locations corresponds to a periodicity of inserting a padding sequence into the data flow.

In this embodiment of this application, the data flow is a bit stream sent by a transmitter to a receiver.

In this embodiment of this application, the first module may report the target delay to the second module. In an example, the second module may be a MAC layer module of the communication apparatus. In this way, the MAC layer module may compensate for a recorded timestamp based on the target delay, so that a timestamp obtained through compensation is more accurate.

In this embodiment of this application, if the first module is a module corresponding to the transmitter, for example, a module corresponding to the inner FEC shown in FIG. 1d, or the optical module including the PMA 102, the inner FEC, and the PMD shown in FIG. 1d, the first module may perform an inner FEC encoding operation and a pad addition operation on data entering the first module. Correspondingly, in an example, the data flow described herein may be a data flow on which the inner FEC encoding operation and the pad addition operation are performed. If the first module is a module corresponding to the receiver, in an example, the data flow may be a data flow sent by the transmitter to the first module. In other words, the data flow is a data flow entering the first module, and the inner FEC encoding operation and the pad addition operation are performed on the data flow at the transmitter.

In another example, it is considered that after the transmitter sends the data flow to the receiver, the receiver may perform inner FEC decoding on the data flow. Therefore, the data flow may alternatively be a data flow obtained by the receiver by performing inner FEC decoding on the received data flow. In other words, if the first module is a module corresponding to the receiver, in another example, the data flow may be a data flow obtained through inner FEC decoding.

The first module being a module corresponding to the transmitter may be understood as that the first module is a module in the communication apparatus functioning as the transmitter. The first module being a module corresponding to the receiver may be understood as that the first module is a module in the communication apparatus functioning as the receiver. The first module being a module corresponding to the receiver may also be understood as that the first module corresponds to the receiver. The first module being a module corresponding to the transmitter may also be understood as that the first module corresponds to the transmitter.

In this embodiment of this application, the target delay is a delay of the data at the plurality of specific locations that passes through the first module. Alternatively, the target delay is a delay of the data at the plurality of specific locations that passes through an inner FEC layer in the first module. When the first module is an optical module, the target delay is a delay of the data at the plurality of specific locations that passes through the optical module. Alternatively, the target delay is a delay of the data at the plurality of specific locations that passes through an inner FEC layer in the optical module. The inner FEC layer is a layer that implements an inner FEC function. In a scenario in which the first module is a PHY module, the target delay is a delay of the data at the plurality of specific locations that passes through an inner FEC layer in the PHY module.

In a specific example, the optical module may include an inner FEC module corresponding to the inner FEC layer. Therefore, in an example, the target delay may be a delay of the data at the plurality of specific locations that passes through the inner FEC module in the optical module. The inner FEC module is configured to implement an inner FEC function. In a specific example, the inner FEC module includes an inner FEC encoding module and/or an inner FEC decoding module. The inner FEC encoding module is configured to implement an inner FEC encoding function, and the inner FEC decoding module is configured to implement an inner FEC decoding function. In an example, when the communication apparatus functions as the transmitter, the inner FEC module includes the inner FEC encoding module. In another example, when the communication apparatus functions as the receiver, the inner FEC module includes the inner FEC decoding module. In still another example, it is considered that a communication apparatus may be used as both the transmitter and the receiver. Therefore, the inner FEC module may include the inner FEC encoding module and the inner FEC decoding module.

In this embodiment of this application, if the first module corresponds to the transmitter, the target delay corresponding to the data at the plurality of specific locations is equivalent to a maximum delay. If the first module corresponds to the receiver, the target delay corresponding to the data at the plurality of specific locations is equivalent to a minimum delay. It can be learned from the foregoing descriptions of FIG. 1h that the plurality of specific locations may be locations circled by the circles in FIG. 1h, namely, start locations of specific data blocks. Refer to FIG. 1h for understanding. For the transmitter, the plurality of specific locations may be locations circled by the hollow circles in FIG. 1h. For the receiver, the plurality of specific locations may be locations circled by the solid circles in FIG. 1h. The plurality of specific locations are separated by the fixed length. In addition, the periodicity of the plurality of specific locations corresponds to the periodicity of inserting the padding sequence into the data flow.

It can be learned from the foregoing descriptions of FIG. 1h that the periodicity of the plurality of specific locations may be 8712 data blocks or 8704 data blocks, where 8712 is the periodicity after the padding sequence is inserted into the data flow, and 8704 is the periodicity before the padding sequence is inserted into the data flow. Certainly, the periodicity of the plurality of specific locations may alternatively be an integer multiple of 8712 data blocks or an integer multiple of 8704 data blocks. For example, if the periodicity of the specific locations is K times of 8712 data blocks or 8704 data blocks, a larger value of K indicates a smaller quantity of specific locations for which statistics on a delay need to be collected, and correspondingly, fewer computing resources are consumed for collecting statistics on the target delay.

In an example, one data block may include 128 bits or 120 bits. For example, if the data block is a data block obtained through inner FEC encoding, the data block includes 128 bits. If inner FEC encoding is not performed on the data block or if inner FEC decoding is performed on the data block, the data block includes 120 bits. If one data block includes 128 bits, the data block may also be referred to as an inner FEC codeword.

It can be learned from the foregoing descriptions of FIG. 1h that the periodicity of the plurality of specific locations may include the following several cases:
8704*120=1044480 bits, 8712*120=1045440 bits, 8704*128=1114112 bits, or 8712*128=1115136 bits.

Therefore, in an example, the periodicity of the plurality of specific locations may be an integer multiple of 1044480 bits, an integer multiple of 1114112 bits, or an integer multiple of 1115136 bits.

In a scenario in which the transmitter performs convolutional interleaving, BCH encoding, and pad insertion, one data block may include 4 bits, and the periodicity of the plurality of specific locations may be 65 data blocks or 64 data blocks, where 65 is the periodicity after the padding sequence is inserted into the data flow, and 64 is the periodicity before the padding sequence is inserted into the data flow.

In this embodiment of this application, the specific location may be a start location of the data block. The start location of the data block may be a 1^{st} byte, a 1^{st} bit, or a 1^{st} symbol of the data block. In the foregoing scenario in which the data block includes 128 bits, the specific data block described herein may be a specific FEC codeword, for example, may be an inner FEC codeword.

For example, in this embodiment of this application, the specific location may be a start location of a data block immediately after the padding sequence is inserted into the data flow, that is, a start location of a 1^{st} data block in payload data (payload).

In an example, the data flow may include a plurality of pieces of target data, and each piece of target data may include N data blocks. Correspondingly, the specific locations may be start locations of the N data blocks. In other words, the data flow may include a plurality of data blocks. The plurality of data blocks may be grouped into a plurality of groups with N data blocks in each group, and one group corresponds to one piece of target data. In a scenario in which one data block includes 128 bits, the target data may include N inner FEC codewords.

In this embodiment of this application, in addition to inserting the padding sequence into the data flow, the transmitter may further insert a parity sequence. Specifically, when performing inner FEC encoding on the data flow, the transmitter may insert an 8-bit parity sequence for every 120-bit data. In this embodiment of this application, a periodicity of inserting, by the transmitter, the padding sequence into the data flow is an integer multiple of a periodicity of inserting the parity sequence into the data flow. For example, it may be understood with reference to FIG. 1h. In FIG. 1h, the periodicity of the small sawtooth corresponds to the periodicity of inserting the parity sequence into the data flow, the periodicity of the large sawtooth corresponds to the periodicity of inserting the padding sequence into the data flow, and the periodicity of the large sawtooth is an integer multiple of the periodicity of the small sawtooth. In an example, the periodicity of the large sawtooth may be 8704 times the periodicity of the small sawtooth. Because the periodicity of inserting the padding sequence into the data flow is an integer multiple of the periodicity of inserting the parity sequence into the data flow, a peak location of a large sawtooth overlaps a peak location of a small sawtooth, and a trough location of the large sawtooth overlaps a trough location of the small sawtooth. Therefore, the periodicity of the specific locations may be determined based on the periodicity of inserting the padding sequence into the data flow, so as to determine the target delay.

In an example, in the data at the plurality of specific locations, data at each specific location may correspond to one first delay. Therefore, the data at the plurality of specific locations may correspond to a plurality of first delays.

In this embodiment of this application, the plurality of first delays may be the same, may not be completely the same, or may be completely different. This is not specifically limited in this embodiment of this application.

As described above, the existing IEEE 802.3cx defines a corresponding maximum delay register and a corresponding minimum delay register for each layer of a physical layer in clause 90. Therefore, to be compatible with a mechanism for reporting a delay by the physical layer in IEEE 802.3cx clause 90, a maximum value and/or a minimum value among the plurality of first delays may be reported. In other words, the target delay may be the maximum value and/or the minimum value among the plurality of first delays.

As described above, the plurality of first delays may be the same, may not be completely the same, or may be completely different. When the plurality of first delays are the same, the maximum value and the minimum value are the same. When the plurality of first delays are not completely the same or are completely different, the maximum value is greater than the minimum value.

In an example, during specific implementation of S101, the first module may measure the first delay corresponding to the data at each of the plurality of specific locations to obtain the plurality of first delays. Examples are listed below for description:

If the first module corresponds to the transmitter, for the data flow entering the first module, 8704 data blocks (where each data block includes 120 bits) may be used as one group, and a first delay of data at a start location in each group of data blocks within the first module is measured to obtain a plurality of first delays.

If the first module corresponds to the receiver, for the data flow entering the first module, 8712 data blocks (where each data block includes 128 bits) may be used as one group, and a first delay of data at a start location in each group of data blocks within the first module is measured to obtain a plurality of first delays.

A specific implementation of determining the first delay is not specifically limited in this embodiment of this application.

In an example, the first module may record a delay of the data at the specific location in the target data, to determine the first delay. In another example, the first module may determine delays of data at a plurality of locations in the target data that passes through the first module, to obtain a plurality of delays corresponding to each piece of target data. The plurality of locations described herein may include the specific location. For example, the plurality of locations may be locations in the target data. Correspondingly, for any piece of target data, the first delay may be determined from a plurality of delays corresponding to the target data. That is, a delay corresponding to the specific location is extracted from the plurality of delays, to obtain the first delay. For example, for the target data, the first module may determine a delay of each bit of the target data that passes through the first module, and extract, from the delays, a delay of data that is at a start location in the target data and that passes through the first module, to obtain the first delay.

A manner of determining a delay of data that is at any location in the target data and that passes through the first module is not specifically limited in this embodiment of this application. The following describes two possible implementations.

In an implementation, the first module may record a first time at which the first module receives the data at the location, record a second time at which the first module sends the data at the location, and determine a difference obtained by subtracting the first time from the second time as the delay of the data that is at the location and that passes through the first module.

In another example, after receiving the data at the location, the first module may buffer the data. Correspondingly, the first module may sequentially send the buffered data based on data already in a buffer. Therefore, the position of the data in the buffer may represent a waiting duration of the data in the buffer, which in turn represents a delay of the data that passes through the first module. Therefore, the first module may determine, based on the position of the data in the buffer, the delay of the data that passes through the first module.

S102: Report the target delay corresponding to the data at the plurality of specific locations in the data flow.

The first module may report the target delay to the second module via a corresponding register. In a scenario in which the target delay includes the foregoing maximum value and/or minimum value, in an example, the first module may report the maximum value and/or the minimum value to the second module by using the corresponding register. The following describes several specific implementations in which the first module reports the maximum value and/or the minimum value to the second module by using the corresponding register.

In an example, the first module corresponds to the transmitter. In this case:
In a specific example, a new register may be defined to report the maximum value and/or the minimum value to the second module. For example, a maximum TX delay register and/or a minimum TX delay register of an inner FEC are/is defined, where the maximum TX delay register is configured to report the maximum value, and the minimum TX delay register is configured to report the minimum value. In other words, the first module may report the maximum value to the second module via the maximum TX delay register of the inner FEC, and/or report the minimum value to the second module via the minimum TX delay register of the inner FEC.

In another specific example, the first module may report the maximum value to the second module via a maximum TX delay register of a PMA/PMD. Similarly, the first module may report the minimum value to the second module via a minimum TX delay register of the PMA/PMD. In this manner, an existing register may still be used to report the target delay.

In an example, the first module corresponds to the receiver. In this case:
In another specific example, a new register may be defined to report the maximum value and/or the minimum value to the second module. For example, a maximum RX delay register and/or a minimum RX delay register of the inner FEC are/is defined, where the maximum RX delay register is configured to report the maximum value, and the minimum RX delay register is configured to report the minimum value. In other words, the first module may report the maximum value to the second module via the maximum RX delay register of the inner FEC, and/or report the minimum value to the second module via the minimum RX delay register of the inner FEC.

In another specific example, the first module may report the maximum value to the second module via a maximum RX delay register of a PMA/PMD. Similarly, the first module may report the minimum value to the second module via a minimum RX delay register of the PMA/PMD.

It can be learned from the foregoing descriptions that, by using the solutions in this embodiment of this application, the first module may accurately report a delay to the second module by following "a delay reported by a transmitter is equivalent to a maximum delay, and a delay reported by a receiver is equivalent to a minimum delay".

The foregoing describes the delay reporting method provided in embodiments of this application. The following describes, with reference to a specific scenario, the solutions provided in embodiments of this application.

**Embodiment 1:** Specific implementation of the delay reporting method shown in FIG. 2.

In this scenario, a structure of a communication apparatus may be the structure shown in FIG. 1d. A first module may be an optical module of the communication apparatus, and the optical module includes the PMA 102, the inner FEC, and the PMD.

For a communication apparatus functioning as a transmitter, an optical module of the communication apparatus may perform the following operations:
S1: Record a delay of a start location of an i^{th} data block in a data flow sent by the optical module and passing through the optical module, to obtain DelayTX (1, i).

1 represents the start location, and may be a 1^{st} bit, a 1^{st} byte, or a 1^{st} symbol.

A value of i may be 8704, 8704*2, 8704*3, ..., or 8704*k.

S2: Determine a maximum value DelayTX_max of DelayTX (1, i) and a minimum value DelayTX_min of DelayTX (1, i).

S3: Report DelayTX_max and DelayTX_min to a MAC layer module.

In an example, DelayTX_max may be reported to the MAC layer module via a maximum TX delay register of an inner FEC, and DelayTX_min may be reported to the MAC layer module via a minimum TX delay register of the inner FEC.

In another example, DelayTX_max may be reported to the MAC layer module via a maximum TX delay register of a PMA/PMD, and DelayTX_min may be reported to the MAC layer module via a minimum TX delay register of the PMA/PMD.

For a communication apparatus functioning as a receiver, an optical module of the communication apparatus may perform the following operations:
S1': Record a delay of a start location of a j^{th} inner FEC block in a data flow received by the optical module and passing through the optical module, to obtain DelayRX (1, j).

1 represents the start location, and may be a 1^{st} bit, a 1^{st} byte, or a 1^{st} symbol.

A value of j may be 8712, 8712*2, 8712*3, ..., or 8712*k.

S2': Determine a maximum value DelayRX_max of DelayRX (1, j) and a minimum value DelayRX_min of DelayRX (1, j).

S3': Report DelayRX_max and DelayRX_min to a MAC layer module.

In an example, DelayRX_max may be reported to the MAC layer module via a maximum RX delay register of an inner FEC, and DelayRX_min may be reported to the MAC layer module via a minimum RX delay register of the inner FEC.

In another example, DelayRX_max may be reported to the MAC layer module via a maximum RX delay register of a PMA/PMD, and DelayRX_min may be reported to the MAC layer module via a minimum RX delay register of the PMA/PMD.

The inventor of this application further finds that, if submodules in the first module include a submodule capable of introducing a delay jitter, and the first module can report the delay information to the second module based on a delay jitter value, the delay information can also be accurately reported to the second module in compliance with the following statement in the IEEE 802.3cx standard: "a delay reported by a transmitter is equivalent to a maximum delay, and a delay reported by a receiver is equivalent to a minimum delay" as specified in the IEEE 802.3cx standard.

In view of this, embodiments of this application further provide another delay reporting method parallel to that shown in FIG. 2. The following describes the delay reporting method with reference to FIG. 4. FIG. 4 is a schematic flowchart of another delay reporting method according to an embodiment of this application.

The method shown in FIG. 4 may be applied to a first module. For the first module, refer to the foregoing descriptions of the first module. Details are not described herein again.

The method shown in FIG. 4 may include S201 and S202 below.

S201: Obtain a delay jitter value of target data passing through a first submodule in the first module, where the first submodule includes a submodule with a fixed delay jitter, the target data is data sent by the first module or data received by the first module, and the delay jitter value is the preset fixed value.

For the target data, refer to the foregoing descriptions of the target data in the method shown in FIG. 2. Details are not described herein again.

In this embodiment of this application, the first submodule has the fixed delay jitter. It can be learned from the foregoing descriptions of the inner FEC function that, parity sequence addition or deletion, data interleaving or deinterleaving, and padding sequence addition or deletion in the inner FEC function each cause a delay jitter. For a transmitter, a delay jitter caused by parity sequence addition, data interleaving, and padding sequence addition is of the fixed value. For a receiver, a delay jitter caused by parity sequence deletion, data deinterleaving, and padding sequence deletion is also of the fixed value.

Therefore, in an example, the first submodule may include: a submodule with a delay jitter caused by parity sequence addition or deletion, a submodule with a delay jitter caused by padding sequence addition or deletion, and a submodule with a delay jitter caused by data flow interleaving or deinterleaving. Alternatively, the first submodule may further include a cyclic shift submodule.

In a specific example, for the transmitter, the first submodule may include: a submodule with a delay jitter caused by parity sequence addition, a submodule with a delay jitter caused by padding sequence addition, and a submodule with a delay jitter caused by data flow interleaving. Correspondingly, for the receiver, the first submodule may include: a submodule with a delay jitter caused by parity sequence deletion, a submodule with a delay jitter caused by padding sequence deletion, and a submodule with a delay jitter caused by data flow deinterleaving.

In an example, the submodule with the delay jitter caused by parity sequence addition may be a submodule in an inner FEC module that performs inner FEC encoding; the submodule with the delay jitter caused by padding sequence addition may be a submodule in the inner FEC module that performs a padding sequence addition operation; and the submodule with the delay jitter caused by data flow interleaving may be a submodule in the inner FEC module that performs data flow interleaving. In other words, the first submodule may include a submodule in the inner FEC module that performs inner FEC encoding, data flow interleaving, and padding sequence addition.

In another example, the submodule with the delay jitter caused by parity sequence deletion may be a submodule in an inner FEC module that performs inner FEC decoding; the submodule with the delay jitter caused by padding sequence deletion may be a submodule in the inner FEC module that performs a padding sequence deletion operation; and the submodule with the delay jitter caused by data flow deinterleaving may be a submodule in the inner FEC module that performs data flow deinterleaving. In other words, the first submodule may include a submodule in the inner FEC module that performs inner FEC decoding, data flow deinterleaving, and padding sequence deletion.

In another example, the first submodule may be a cyclic shift submodule. The cyclic shift submodule is configured to perform a cyclic shift operation. In an example, before performing encoding processing (for example, inner FEC processing), the transmitter may further perform the cyclic shift operation. Correspondingly, after performing decoding processing, the receiver may further perform the cyclic shift operation. In another example, after performing a BCH encoding operation and before performing pilot insertion, the transmitter may further perform the cyclic shift operation. Correspondingly, after performing pilot deletion and before performing a BCH decoding operation, the receiver may further perform the cyclic shift operation.

In an example, if a shift direction corresponding to the cyclic shift operation performed by the receiver is the same as a shift direction corresponding to the cyclic shift operation performed by the transmitter, the first submodule may include a cyclic shift submodule that performs the cyclic shift operation. In this scenario, a delay jitter value introduced by the cyclic shift submodule may be 4.5 nanoseconds.

In this embodiment of this application, the delay jitter value may be a preset fixed value. For example, when the first module is an optical module, the delay jitter value may include a sum of a first jitter value and a second jitter value, where the first jitter value may be a delay jitter value introduced by parity sequence addition or deletion, and data flow interleaving or deinterleaving, and the second jitter value may be a delay jitter value introduced by pad addition or deletion. The fixed value may be, for example, a value between 4.6 ns and 4.8 ns. In a specific example, it can be learned from the foregoing descriptions of FIG. 1e, FIG. 1f, and FIG. 1g that a delay jitter value introduced by parity sequence addition or deletion and data flow interleaving or deinterleaving is 0.28125 ns, and a delay jitter value introduced by pad addition or deletion is 4.5 ns. Therefore, the delay jitter value may be 4.78125 ns. When the first submodule further includes the cyclic shift submodule, the delay jitter value may be the sum of the first jitter value and the second jitter value further plus a delay jitter of 4.5 ns introduced by the cyclic shift submodule. That is, the delay jitter value may be between (4.5 ns+4.6 ns=9.1 ns) and (4.5 ns+4.8 ns=9.3 ns).

In some examples, the delay jitter value may also be referred to as a delay variation value (variation).

S202: Report delay information to a second module based on the delay jitter value.

After the delay jitter value is determined, the delay information may be reported to the second module based on the delay jitter value.

For the second module, refer to the descriptions of the second module in the foregoing embodiments. Details are not described herein again.

In an example, the first module may report the delay jitter value to the second module.

In another example, the first module may further determine a first delay of the target data passing through a second submodule in the first module. In this embodiment of this application, the second submodule may be a submodule that almost does not introduce a delay jitter. The submodule that almost does not introduce a delay jitter described herein may also be understood as a submodule that introduces a small delay jitter. In a specific example, the second submodule may be a submodule other than the first submodule in the first module.

In an example, if the first module corresponds to the transmitter, the second submodule may be, for example, a submodule in the inner FEC module that performs operations such as convolutional interleaving, distribution, and modulation encoding. The modulation encoding described herein may be, for example, PAM4 encoding. If the first module corresponds to the receiver, the second submodule may be, for example, a submodule in the inner FEC module that performs inverse convolutional deinterleaving, multiplexing, and modulation decoding operations. The modulation decoding described herein may be, for example, PAM4 decoding. In this embodiment of this application, the first delay may be determined in a plurality of implementations. The following describes two possible implementations.

In an example, the first module may obtain the first delay that is preset. The first delay may be a value determined by the first module in a design phase, and the value of the first delay is related to performance of the first module.

In another example, the first module may collect statistics on the first delay of the target data passing through the second submodule. In a possible implementation, during specific implementation of collecting statistics on the first delay of the target data passing through the second submodule, statistics on a delay of at least one bit of the target data that passes through the second submodule may be collected, so as to obtain the first delay. For example, the target data may be sampled, and statistics on a delay of data obtained through sampling and passing through the second submodule is collected. For another example, statistics on a delay of each bit of the target data that passes through the second submodule may be collected, so as to obtain the first delay.

For any bit of data, a delay of the data passing through the second submodule may be a difference between the time at which the second submodule sends the data and the time at which the second submodule receives the data, or may be determined based on a position of the data in a buffer. This is not specifically limited in this embodiment of this application.

In a scenario in which the first module determines the first delay, during specific implementation of S202, the delay information may be reported to the second module based on the delay jitter value and the first delay.

In a specific example, the first module may determine the delay jitter value and the first delay as the delay information, and report the determined delay information to the second module.

In another specific example, the first module may determine a target delay based on the delay jitter value and the first delay, and report the target delay as the delay information to the second module.

A manner of determining the target delay based on the delay jitter value and the first delay is not specifically limited in this embodiment of this application. The first module may calculate the delay jitter value and the first delay, to obtain the target delay.

In an example, to ensure the data reported by the first module meets the following requirement: "a delay reported by a transmitter is equivalent to a maximum delay, and a delay reported by a receiver is equivalent to a minimum delay", a specific implementation in which the first communication apparatus determines the target delay based on the delay jitter value and the first delay may be related to a role of the first communication apparatus.

In a specific example, if the first module corresponds to a communication apparatus functioning as a transmitter, the first communication apparatus may determine a sum of the delay jitter value and the first delay as the target delay. If the first communication apparatus corresponds to a communication apparatus functioning as a receiver, the first communication apparatus may determine a difference between the first delay and the delay jitter value as the target delay.

In an example, the first delay may include one delay.

In another example, it is considered that the existing IEEE 802.3cx defines a corresponding maximum delay register and a corresponding minimum delay register for each layer of a physical layer in clause 90. Therefore, to be compatible with a mechanism for reporting a delay by the physical layer in IEEE 802.3cx clause 90, the first delay may include two delays: a maximum delay of the target data passing through the second submodule and a minimum delay of the target data passing through the second submodule. In an example, the maximum delay is the same as the minimum delay. In another example, the maximum delay is greater than the minimum delay.

As described above, the first delay may include a maximum delay and a minimum delay. In this case, the target delay determined based on the delay jitter value and the first delay may include a maximum target delay and a minimum target delay.

The maximum target delay may be determined based on the maximum delay and the delay jitter value. Specifically, if the first module corresponds to a communication apparatus functioning as a transmitter, the first communication apparatus may determine a sum of the delay jitter value and the maximum delay as the maximum target delay, and determine a sum of the delay jitter value and the minimum delay as the minimum target delay. If the first communication apparatus corresponds to a communication apparatus functioning as a receiver, the first communication apparatus may determine a difference between the maximum delay and the delay jitter value as the maximum target delay, and determine a difference between the minimum delay and the delay jitter value as the minimum target delay.

The following describes a manner in which the first module reports the maximum target delay and the minimum target delay to the second module.

In an example, the first module corresponds to the transmitter. In this case:
In another specific example, a new register may be defined to report the maximum target delay and the minimum target delay to the second module. For example, a maximum TX delay register and a minimum TX delay register of an inner FEC are defined, where the maximum TX delay register is configured to report the maximum target delay, and the minimum TX delay register is configured to report the minimum target delay. In other words, the first module may report the maximum target delay to the second module via the maximum TX delay register of the inner FEC, and/or report the minimum target delay to the second module via the minimum TX delay register of the inner FEC.

In another specific example, the first module may report the maximum target delay to the second module via a maximum TX delay register of a PMA/PMD. Similarly, the first module may report the minimum target delay to the second module via a minimum TX delay register of the PMA/PMD.

In an example, the first module corresponds to the receiver. In this case:
In another specific example, a new register may be defined to report the maximum target delay and the minimum target delay to the second module. For example, a maximum RX delay register and a minimum RX delay register of an inner FEC are defined, where the maximum RX delay register is configured to report the maximum target delay, and the minimum RX delay register is configured to report the minimum target delay. In other words, the first module may report the maximum target delay to the second module via the maximum RX delay register of the inner FEC, and/or report the minimum target delay to the second module via the minimum RX delay register of the inner FEC.

In another specific example, the first module may report the maximum target delay to the second module via a maximum RX delay register of a PMA/PMD. Similarly, the first module may report the minimum target delay to the second module via a minimum RX delay register of the PMA/PMD.

In an example, the first module further includes a third submodule, and the first module may further determine a second delay of the target data passing through the third submodule in the first module. The third submodule described herein may be another submodule in the first module, different from the first submodule and the second submodule. For example, the third submodule may include a PMA submodule and a PMD submodule.

The implementation principle of determining, by the first module, the second delay of the target data passing through the third submodule is the same as that of determining, by the first module, the first delay of the target data passing through the second submodule. Therefore, for specific implementation of "determining, by the first module, the second delay of the target data passing through the third submodule", refer to the foregoing descriptions of determining the first delay by the first module. Details are not described herein again.

In a scenario in which the first module determines the second delay, during specific implementation of S202, the delay information may be reported to the second module based on the delay jitter value and the second delay.

In a specific example, the first module may determine the delay jitter value and the second delay as the delay information, and report the determined delay information to the second module.

In another specific example, the first module may calculate the delay jitter value and the second delay, and report a calculation result as the delay information to the second module. In a specific example, if the first module corresponds to a communication apparatus functioning as a transmitter, the first communication apparatus may determine a sum of the delay jitter value and the second delay as the delay information. If the first communication apparatus corresponds to a communication apparatus functioning as a receiver, the first communication apparatus may determine, as the delay information, a difference between the second delay and the delay jitter value.

In this scenario, the first communication apparatus may report the delay information to the second module by using related registers of the PMA/PMD. In an example, the second delay may also include a maximum delay and a minimum delay. Correspondingly, the delay information may include a maximum delay value obtained based on the delay jitter value and the maximum delay of the second delay, and a minimum delay value obtained based on the delay jitter value and the minimum delay of the second delay. Further, the first communication apparatus may report the maximum delay value and the minimum delay value to the second module by using the related registers of the PMA/PMD.

Specifically, if the first module corresponds to the transmitter, that is, the target data is data sent by the first module, the first module may report the maximum delay value to the second module via the maximum TX delay register of the PMA/PMD. Similarly, the first module may report the minimum delay value to the second module via the minimum TX delay register of the PMA/PMD. For example, when the first module is a module with an inner FEC function (for example, an optical module), the first module may report the maximum delay value to the second module via the maximum TX delay register of the PMA/PMD, and the first module may report the minimum delay value to the second module via the minimum TX delay register of the PMA/PMD.

If the first module corresponds to the receiver, that is, the target data is data received by the first module, the first module may report the maximum delay value to the second module via the maximum RX delay register of the PMA/PMD. Similarly, the first module may report the minimum delay value to the second module via the minimum RX delay register of the PMA/PMD. For example, when the first module is a module with an inner FEC function (for example, an optical module), the first module may report the maximum delay value to the second module via the maximum RX delay register of the PMA/PMD, and the first module may report the minimum delay value to the second module via the minimum RX delay register of the PMA/PMD.

The foregoing describes the delay reporting method provided in embodiments of this application. The following describes, with reference to a specific scenario, the solutions provided in embodiments of this application.

**Embodiment 2:** Specific implementation of the delay reporting method shown in FIG. 4.

In this scenario, a first module may be an optical module of a communication apparatus, and the optical module includes a PMA 102, an inner FEC, and a PMD.

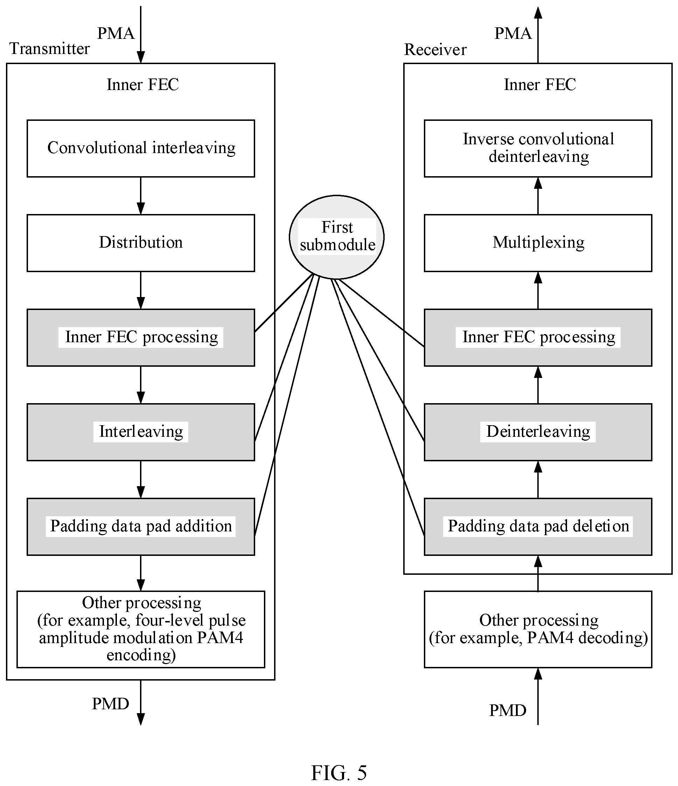

In this case, operations performed by the inner FEC may be shown in FIG. 5. FIG. 5 is a diagram of a processing process of an inner FEC according to an embodiment of this application. As shown in FIG. 5:
For a transmitter, an inner FEC of the transmitter may perform the following operations: convolutional interleaving, distribution, inner FEC processing, interleaving, pad addition, and other processing. The other processing described herein may include, for example, PAM4 encoding. The inner FEC processing may be, for example, performing a parity sequence addition operation. A submodule that performs parity sequence addition, interleaving, and pad addition is the first submodule, and a submodule that performs convolutional interleaving, distribution, and the other processing is the second submodule.

For a receiver, operations performed by an inner FEC of the receiver are inverse operations of the operations performed by the inner FEC of the transmitter. For example, the inner FEC of the receiver may perform the following operations: other processing (for example, PAM4 decoding), pad deletion, deinterleaving, inner FEC processing, multiplexing, and inverse convolutional deinterleaving. The inner FEC processing may be, for example, performing a parity sequence deletion operation. A submodule that performs parity sequence deletion, deinterleaving, and pad deletion is the first submodule, and a submodule that performs inverse convolutional deinterleaving, multiplexing, and the other processing is the second submodule.

For a communication apparatus functioning as a transmitter, an optical module of the communication apparatus may perform the following operations:
S4: Obtain a delay jitter value 4.78125.
S5: Determine a first delay of target data passing through the second submodule in the first module, where the first delay includes a maximum delay Xmax1 and a minimum delay Xmin1.
S6: Report a maximum target delay Xmax1+4.78125 and a minimum target delay Xmin1+4.78125 to a MAC layer module.

In an example, Xmax1+4.78125 may be reported to the MAC layer module via a maximum TX delay register of an inner FEC, and Xmin1+4.78125 may be reported to the MAC layer module via a minimum TX delay register of the inner FEC.

In another example, Xmax1+4.78125 may be reported to the MAC layer module via a maximum TX delay register of a PMA/PMD, and Xmin1+4.78125 may be reported to the MAC layer module via a minimum TX delay register of the PMA/PMD.

For a communication apparatus functioning as a receiver, an optical module of the communication apparatus may perform the following operations:
S4': Obtain a delay jitter value 4.78125.
S5': Determine a first delay of target data passing through the second submodule in the first module, where the first delay includes a maximum delay Xmax2 and a minimum delay Xmin2.
S6': Report a maximum target delay Xmax2-4.78125 and a minimum target delay Xmin2-4.78125 to a MAC layer module.

In an example, Xmax2-4.78125 may be reported to the MAC layer module via a maximum RX delay register of an inner FEC, and Xmin2-4.78125 may be reported to the MAC layer module via a minimum RX delay register of the inner FEC.

In another example, Xmax2-4.78125 may be reported to the MAC layer module via a maximum RX delay register of a PMA/PMD, and Xmin2-4.78125 may be reported to the MAC layer module via a minimum RX delay register of the PMA/PMD.

It should be noted that FIG. 5 is merely for ease of understanding the processing process of the inner FEC shown in this solution. In addition to the content shown in FIG. 5, the processing process of the inner FEC may further include other content. For example, after performing the distribution operation and before performing inner FEC processing, the transmitter may further perform a cyclic shift operation. Correspondingly, after performing inner FEC processing and before performing the multiplexing operation, the receiver may further perform the cyclic shift operation. In this case:

For a communication apparatus functioning as a transmitter, an optical module of the communication apparatus may perform the following operations:
S7: Obtain a delay jitter value 4.78125+4.5=9.28125.
S8: Determine a first delay of target data passing through the second submodule in the first module, where the first delay includes a maximum delay Xmax3 and a minimum delay Xmin3.
S9: Report a maximum target delay Xmax3+9.28125 and a minimum target delay Xmin3+9.28125 to a MAC layer module.

In an example, Xmax3+9.28125 may be reported to the MAC layer module via a maximum TX delay register of an inner FEC, and Xmin3+9.28125 may be reported to the MAC layer module via a minimum TX delay register of the inner FEC.

In another example, Xmin3+9.28125 may be reported to the MAC layer module via a maximum TX delay register of a PMA/PMD, and Xmin3+9.28125 may be reported to the MAC layer module via a minimum TX delay register of the PMA/PMD.

For a communication apparatus functioning as a receiver, an optical module of the communication apparatus may perform the following operations:
S7': Obtain a delay jitter value 9.28125.
S8': Determine a first delay of target data passing through the second submodule in the first module, where the first delay includes a maximum delay Xmax4 and a minimum delay Xmin4.
S9': Report a maximum target delay Xmax4-9.28125 and a minimum target delay Xmin4-9.28125 to a MAC layer module.

In an example, Xmax4-9.28125 may be reported to the MAC layer module via a maximum TX delay register of an inner FEC, and Xmin4-9.28125 may be reported to the MAC layer module via a minimum TX delay register of the inner FEC.

In another example, Xmax4-9.28125 may be reported to the MAC layer module via a maximum TX delay register of a PMA/PMD, and Xmin4-9.28125 may be reported to the MAC layer module via a minimum TX delay register of the PMA/PMD.

Based on the delay reporting methods provided in the foregoing embodiments, an embodiment of this application further provides corresponding apparatuses. The following describes the apparatuses with reference to the accompanying drawings.

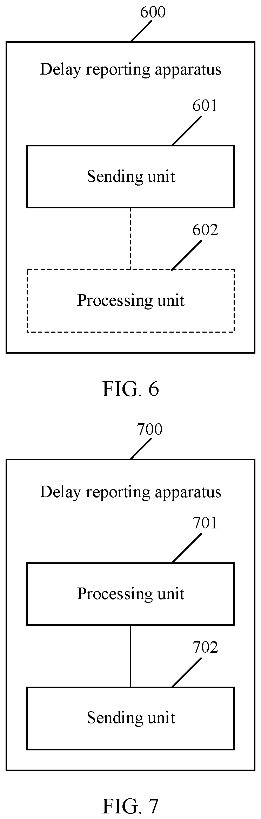

FIG. 6 is a diagram of a structure of a delay reporting apparatus according to an embodiment of this application. The delay reporting apparatus shown in FIG. 6 may be configured to perform the delay reporting method shown in FIG. 2 provided in the foregoing method embodiments.

As shown in FIG. 6, the delay reporting apparatus 600 includes a sending unit 601.

The sending unit 601 is configured to report a target delay corresponding to data at a plurality of specific locations in a data flow, where the plurality of specific locations are separated by a fixed length, and a periodicity of the plurality of specific locations corresponds to a periodicity of inserting a padding sequence into the data flow.

In a possible implementation, the periodicity of the plurality of specific locations is an integer multiple of 8712 data blocks, the periodicity of the plurality of specific locations is an integer multiple of 8704 data blocks, the periodicity of the plurality of specific locations is an integer multiple of 64 data blocks, or the periodicity of the plurality of specific locations is an integer multiple of 65 data blocks.

In a possible implementation, the data block includes 128 bits, 120 bits, or 4 bits.

In a possible implementation, the periodicity of the plurality of specific locations is an integer multiple of any one of the following values: 1115136 bits, 1114112 bits, 1044480 bits, or 1045440 bits.

In a possible implementation, the specific location is a start location of an FEC codeword, and the start location is a 1^{st} bit, a 1^{st} symbol, or a 1^{st} byte of the FEC codeword.

In a possible implementation, the FEC codeword includes an inner FEC codeword.

In a possible implementation, the data flow is a data flow obtained through inner FEC encoding, or the data flow is a data flow obtained through inner FEC decoding.

In a possible implementation, the periodicity of inserting the padding sequence into the data flow is an integer multiple of a periodicity of inserting a parity sequence into the data flow.

In a possible implementation, the target delay corresponds to a delay of the data passing through an optical module, or the target delay corresponds to a delay of the data passing through an inner FEC layer in the optical module.

In a possible implementation, the apparatus further includes a processing unit 602.

The processing unit 602 is configured to measure a first delay corresponding to data at each of the plurality of specific locations to obtain a plurality of first delays, where the target delay includes a maximum value and/or a minimum value among the plurality of first delays.

In a possible implementation, the sending unit 601 is configured to: report the maximum value via a maximum TX delay register of an inner FEC; and/or report the minimum value via a minimum TX delay register of the inner FEC.

In a possible implementation, the sending unit 601 is configured to: report the maximum value via a maximum TX delay register of a physical medium attachment PMA/physical media dependent PMD; and/or report the minimum value via a minimum TX delay register of the PMA/PMD.

In a possible implementation, the sending unit 601 is configured to: report the maximum value via a maximum RX delay register of an inner FEC; and/or report the minimum value via a minimum RX delay register of the inner FEC.

In a possible implementation, the sending unit 601 is configured to: report the maximum value via a maximum RX delay register of a PMA/PMD; and/or report the minimum value via a minimum RX delay register of the PMA/PMD.

In a possible implementation, the sending unit 601 is configured to report, to a media access control MAC layer, the target delay corresponding to the data at the plurality of specific locations in the data flow.

In a possible implementation, the apparatus is used in an optical module or a physical PHY layer chip.

In a possible implementation, the optical module includes an inner FEC module, and the inner FEC module includes an inner FEC encoding module and/or an inner FEC decoding module.

In a possible implementation, the specific location is a start location of a data block immediately after the padding sequence is inserted into the data flow, and the start location is a 1^{st} bit, a 1^{st} symbol, or a 1^{st} byte of that data block.

FIG. 7 is a diagram of a structure of another delay reporting apparatus according to an embodiment of this application. The delay reporting apparatus shown in FIG. 7 may be configured to perform the delay reporting method shown in FIG. 4 provided in the foregoing method embodiments.

As shown in FIG. 7, the delay reporting apparatus 700 includes a processing unit 701 and a sending unit 702.

The processing unit 701 is configured to obtain a delay jitter value of target data passing through a first submodule in the first module, where the first submodule includes a submodule with a fixed delay jitter, the target data is data sent by the first module or data received by the first module, and the delay jitter value is the preset fixed value.

The sending unit 702 is configured to report delay information to a second module based on the delay jitter value.

In a possible implementation, the processing unit 701 is further configured to determine a first delay of the target data passing through a second submodule in the first module; and the sending unit 702 is configured to report the delay information to the second module based on the delay jitter value and the first delay.

In a possible implementation, the sending unit 702 is configured to report, to the second module, a target delay obtained based on the delay jitter value and the first delay.

In a possible implementation, the target delay includes: a sum of the delay jitter value and the first delay; or a difference between the first delay and the delay jitter value.

In a possible implementation, the first delay includes a maximum delay and a minimum delay of the target data passing through the second submodule; and correspondingly, the target delay includes: a maximum target delay obtained based on the maximum delay and the delay jitter value, and a minimum target delay obtained based on the minimum delay and the delay jitter value.

In a possible implementation, if the target data is the data sent by the first module, the sending unit 702 is configured to: report the maximum target delay to the second module via a maximum TX delay register of an inner forward error correction FEC; and report the minimum target delay to the second module via a minimum TX delay register of the inner FEC.

In a possible implementation, if the target data is the data sent by the first module, the sending unit 702 is configured to: report the maximum target delay to the second module via a maximum TX delay register of a physical medium attachment PMA/physical media dependent PMD; and report the minimum target delay to the second module via a minimum TX delay register of the PMA/PMD.

In a possible implementation, if the target data is the data received by the first module, the sending unit 702 is configured to: report the maximum target delay to the second module via a maximum RX delay register of an inner FEC; and report the minimum target delay to the second module via a minimum RX delay register of the inner FEC.

In a possible implementation, if the target data is the data received by the first module, the sending unit 702 is configured to: report the maximum target delay to the second module via a maximum RX delay register of a PMA/PMD; and report the minimum target delay to the second module via a minimum RX delay register of the PMA/PMD.

In a possible implementation, the second submodule includes a submodule other than the first submodule.

In a possible implementation, the second submodule includes: a submodule in an inner FEC module that performs convolutional interleaving, distribution, and modulation encoding operations; or a submodule in an inner FEC module that performs inverse convolutional deinterleaving, multiplexing, and modulation decoding operations.

In a possible implementation, the processing unit 701 is configured to obtain the first delay that is preset.

In a possible implementation, the processing unit 701 is configured to collect statistics on the first delay of the target data passing through the second submodule.

In a possible implementation, collecting statistics on the first delay of the target data passing through the second submodule includes: collecting statistics on a delay of at least one bit of the target data that passes through the second submodule to obtain the first delay.

In a possible implementation, the processing unit 701 is further configured to determine a second delay of the target data passing through a third submodule in the first module; and the sending unit 702 is configured to report the delay information to the second module based on the delay jitter value and the second delay.

In a possible implementation, the third submodule includes a PMA submodule and/or a PMD submodule.

In a possible implementation, the second module includes a media access control MAC layer module.

In a possible implementation, the fixed value is between 4.6 nanoseconds and 4.8 nanoseconds, or the fixed value is 4.5 nanoseconds, or the fixed value is between 9.1 nanoseconds and 9.3 nanoseconds.

In a possible implementation, the first submodule includes a cyclic shift submodule.

In a possible implementation, the first submodule includes a submodule with a delay jitter caused by parity sequence addition or deletion, or padding sequence addition or deletion.

In a possible implementation, the first submodule includes a submodule with a delay jitter caused by data flow interleaving or deinterleaving.

In a possible implementation, the first submodule includes: a submodule in the inner FEC module that performs inner FEC encoding, data flow interleaving, and padding sequence addition operations; or a submodule in the inner FEC module that performs inner FEC decoding, data flow deinterleaving, and padding sequence deletion operations.

In a possible implementation, the target data includes 8712*N data blocks or 8704*N data blocks, where N is a positive integer.

In a possible implementation, the data block includes 128 bits or 120 bits.

In a possible implementation, the target data includes 1115136*N bits, 1114112*N bits, 1044480*N bits, or 1045440*N bits, where N is a positive integer.

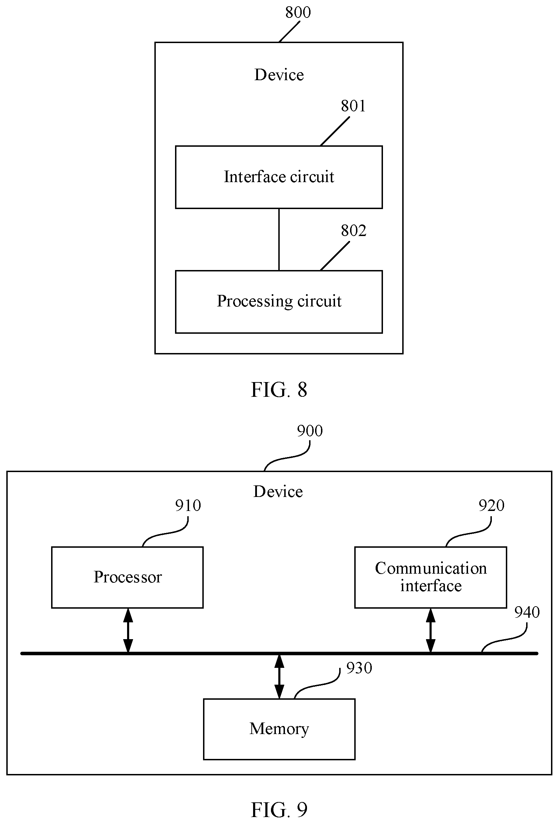

FIG. 8 is a diagram of a structure of a device according to an embodiment of this application. The device 800 shown in FIG. 8 includes an interface circuit 801 and a processing circuit 802. The interface circuit 801 is configured to receive and/or send data, and the processing circuit 802 is configured to process data.

In an example, the device 800 may be configured to perform the delay reporting method corresponding to FIG. 2 provided in the foregoing method embodiments. In this case:

The interface circuit 801 is configured to report a target delay corresponding to data at a plurality of specific locations in a data flow, where the plurality of specific locations are separated by a fixed length, and a periodicity of the plurality of specific locations corresponds to a periodicity of inserting a padding sequence into the data flow. In an example, the processing circuit 802 is configured to measure a first delay corresponding to data at each of the plurality of specific locations to obtain a plurality of first delays, where the target delay includes a maximum value and/or a minimum value among the plurality of first delays.

In another example, the device 800 may be configured to perform the delay reporting method corresponding to FIG. 4 provided in the foregoing method embodiments. In this case:

The processing circuit 802 is configured to obtain a delay jitter value of target data passing through a first submodule in the first module, where the first submodule includes a submodule with a fixed delay jitter, the target data is data sent by the first module or data received by the first module, and the delay jitter value is the preset fixed value; and the interface circuit 801 is configured to report delay information to a second module based on the delay jitter value.

FIG. 9 is a diagram of a structure of a device according to an embodiment of this application.

In an example, the device 900 shown in FIG. 9 may be configured to perform the delay reporting method corresponding to FIG. 2 provided in the foregoing method embodiments.

In another example, the device 900 shown in FIG. 9 may be configured to perform the delay reporting method corresponding to FIG. 4 provided in the foregoing method embodiments.

Refer to FIG. 9. The device 900 includes a processor 910. There may be one or more processors 910 in the device 900, and one processor is used as an example in FIG. 9. The processor 910 is configured to perform the delay reporting method corresponding to FIG. 2 provided in the foregoing method embodiments, or the processor 910 is configured to perform the delay reporting method corresponding to FIG. 4 provided in the foregoing method embodiments.

The processor 910 may be a central processing unit (central processing unit, CPU), an NP, or a combination of a CPU and an NP. The processor 910 may include a digital signal processor (digital signal processor, DSP). The processor 910 may further include a hardware chip. The hardware chip may be an ASIC, a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

In an example, the device 900 further includes a memory 930. The memory 930 may include a volatile memory (English: volatile memory), for example, a random access memory (random access memory, RAM). The memory 930 may alternatively include a non-volatile memory (English: non-volatile memory), for example, a flash memory (English: flash memory), a hard disk drive (hard disk drive, HDD), or a solid-state disk (solid-state drive, SSD). The memory 930 may further include a combination of the foregoing types of memories. When the device 900 is configured to perform the delay reporting method corresponding to FIG. 2 provided in the foregoing method embodiments, the memory 930 may store, for example, the foregoing target delay. When the device is configured to perform the delay reporting method corresponding to FIG. 4 provided in the foregoing method embodiments, the memory may store, for example, the foregoing fixed value.

Optionally, the memory 930 stores an operating system and a program, an executable module or a data structure, or a subset thereof, or an extended set thereof, where the program may include various operation instructions used to implement various operations. The operating system may include various system programs, to implement various basic services and process a hardware-based task. The processor 910 may read the program in the memory 930, to implement the methods provided in embodiments of this application.

In an example, the device 900 further includes a communication interface 920. In this embodiment of this application, the processor 910, the communication interface 920, and the memory 930 may be connected by a bus system or in another manner, and are connected by a bus system 940 in FIG. 9 for example.

The communication interface 920 is configured to receive and/or send data. For example, when the device 900 is configured to perform the delay reporting method corresponding to FIG. 2 provided in the foregoing method embodiments, the communication interface 920 is configured to report a target delay corresponding to data at a plurality of specific locations in a data flow. When the device 900 is configured to perform the delay reporting method corresponding to FIG. 4 provided in the foregoing method embodiments, the communication interface 920 is configured to report delay information to a second module based on a delay jitter value.

The bus system 940 may be a peripheral component interconnect (peripheral component interconnect, PCI) bus, an extended industry standard architecture (extended industry standard architecture, EISA) bus, or the like. The bus system 940 may be classified into an address bus, a data bus, a control bus, and the like. For ease of representation, only one thick line is used to represent the bus in FIG. 9, but this does not mean that there is only one bus or only one type of bus.

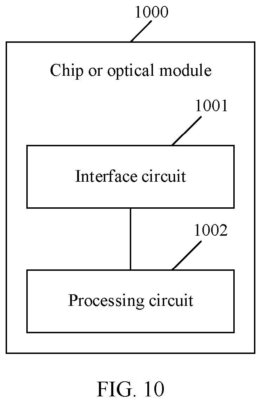

An embodiment of this application further provides a chip or an optical module. FIG. 10 shows a structure of a chip or an optical module. 10 is a diagram of a structure of a chip or an optical module according to an embodiment of this application. The chip or the optical module 1000 shown in FIG. 10 includes an interface circuit 1001 and a processing circuit 1002. The interface circuit 1001 is configured to receive and/or send data, and the processing circuit 1002 is configured to process data.

In an example, the chip or the optical module 1000 may be configured to perform the delay reporting method corresponding to FIG. 2 provided in the foregoing method embodiments. In this case:
The interface circuit 1001 is configured to report a target delay corresponding to data at a plurality of specific locations in a data flow, where the plurality of specific locations are separated by a fixed length, and a periodicity of the plurality of specific locations corresponds to a periodicity of inserting a padding sequence into the data flow. In an example, the processing circuit 1002 is configured to measure a first delay corresponding to data at each of the plurality of specific locations to obtain a plurality of first delays, where the target delay includes a maximum value and/or a minimum value among the plurality of first delays.

In another example, the chip or the optical module 1000 may be configured to perform the delay reporting method corresponding to FIG. 4 provided in the foregoing method embodiments. In this case:
The processing circuit 1002 is configured to obtain a delay jitter value of target data passing through a first submodule in the first module, where the first submodule includes a submodule with a fixed delay jitter, the target data is data sent by the first module or data received by the first module, and the delay jitter value is the preset fixed value. The interface circuit 1001 is configured to report delay information to a second module based on the delay jitter value.

An embodiment of this application further provides a computer-readable storage medium, including instructions or a computer program. When the instructions or the computer program is run on a computer, the computer is caused to perform the methods in the foregoing method embodiments. For example, the computer is caused to perform the delay reporting method corresponding to FIG. 2 provided in the foregoing method embodiments. For another example, the computer is caused to perform the delay reporting method corresponding to FIG. 4 provided in the foregoing method embodiments.

An embodiment of this application provides a computer program product including instructions or a computer program. When the computer program product runs on a computer, the computer is caused to perform the methods in the foregoing method embodiments. For example, the computer is caused to perform the delay reporting method corresponding to FIG. 2 provided in the foregoing method embodiments. For another example, the computer is caused to perform the delay reporting method corresponding to FIG. 4 provided in the foregoing method embodiments.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical service division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

If the integrated unit is implemented in the form of the software service unit and sold or used as a separate product, the integrated unit may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

A person skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing is merely specific implementations of the present invention.

The foregoing embodiments are intended merely to describe the technical solutions of this application, but not to limit the technical solutions. Although this application is described in detail with reference to the foregoing embodiments, a person of ordinary skill in the art should understand that modifications may still be made to the technical solutions described in the foregoing embodiments or equivalent replacements may be made to a part of technical features thereof, without departing from the scope of the technical solutions of embodiments of this application.

## Claims

1. A delay reporting method, wherein the method comprises:
reporting a target delay corresponding to data at a plurality of specific locations in a data flow, wherein the plurality of specific locations are separated by a fixed length, and a periodicity of the plurality of specific locations corresponds to a periodicity of inserting a padding sequence into the data flow.

2. The method according to claim 1, wherein the periodicity of the plurality of specific locations is an integer multiple of 8712 data blocks, the periodicity of the plurality of specific locations is an integer multiple of 8704 data blocks, the periodicity of the plurality of specific locations is an integer multiple of 64 data blocks, or the periodicity of the plurality of specific locations is an integer multiple of 65 data blocks.

3. The method according to claim 2, wherein the data block comprises 128 bits, 120 bits, or 4 bits.

4. The method according to claim 1, wherein the periodicity of the plurality of specific locations is an integer multiple of any one of the following values: 1115136 bits, 1114112 bits, 1044480 bits, or 1045440 bits.

5. The method according to any one of claims 1 to 4, wherein the specific location is a start location of an FEC codeword, and the start location is a 1^{st} bit, a 1^{st} symbol, or a 1^{st} byte of the FEC codeword.

6. The method according to claim 4 or 5, wherein the FEC codeword comprises an inner FEC codeword.

7. The method according to any one of claims 1 to 6, wherein the data flow is a data flow obtained through inner FEC encoding, or the data flow is a data flow obtained through inner FEC decoding.

8. The method according to any one of claims 1 to 7, wherein the periodicity of inserting the padding sequence into the data flow is an integer multiple of a periodicity of inserting a parity sequence into the data flow.

9. The method according to any one of claims 1 to 8, wherein the target delay corresponds to a delay of the data passing through an optical module, or the target delay corresponds to a delay of the data passing through an inner FEC layer in the optical module.

10. The method according to any one of claims 1 to 9, wherein the method further comprises:
measuring a first delay corresponding to data at each of the plurality of specific locations to obtain a plurality of first delays, wherein
the target delay comprises a maximum value and/or a minimum value among the plurality of first delays.

11. The method according to claim 10, wherein reporting the target delay corresponding to the data at the plurality of specific locations in the data flow comprises:
reporting the maximum value via a maximum TX delay register of an inner FEC; and/or
reporting the minimum value via a minimum TX delay register of the inner FEC.

12. The method according to claim 10, wherein reporting the target delay corresponding to the data at the plurality of specific locations in the data flow comprises:
reporting the maximum value via a maximum TX delay register of a physical medium attachment PMA/physical media dependent PMD; and/or
reporting the minimum value via a minimum TX delay register of the PMA/PMD.

13. The method according to claim 10, wherein reporting the target delay corresponding to the data at the plurality of specific locations in the data flow comprises:
reporting the maximum value via a maximum RX delay register of an inner FEC; and/or
reporting the minimum value via a minimum RX delay register of the inner FEC.

14. The method according to claim 10, wherein reporting the target delay corresponding to the data at the plurality of specific locations in the data flow comprises:
reporting the maximum value via a maximum RX delay register of a PMA/PMD; and/or
reporting the minimum value via a minimum RX delay register of the PMA/PMD.

15. The method according to any one of claims 1 to 14, wherein reporting the target delay corresponding to the data at the plurality of specific locations in the data flow comprises:
reporting, to a media access control MAC layer, the target delay corresponding to the data at the plurality of specific locations in the data flow.

16. The method according to any one of claims 1 to 15, wherein the method is applied to an optical module or a physical PHY layer chip.

17. The method according to claim 16, wherein the optical module comprises an inner FEC module, and the inner FEC module comprises an inner FEC encoding module and/or an inner FEC decoding module.

18. The method according to any one of claims 1 to 17, wherein the specific location is a start location of a data block immediately after the padding sequence is inserted into the data flow, and the start location is a 1^{st} bit, a 1^{st} symbol, or a 1^{st} byte of the data block.

19. A delay reporting method, applied to a first module, wherein the method comprises:
obtaining a delay jitter value of target data passing through a first submodule in the first module, wherein the first submodule comprises a submodule with a fixed delay jitter, the target data is data sent by the first module or data received by the first module, and the delay jitter value is the preset fixed value; and
reporting delay information to a second module based on the delay jitter value.

20. The method according to claim 19, wherein the method further comprises:
determining a first delay of the target data passing through a second submodule in the first module; and
reporting the delay information to the second module based on the delay jitter value comprises:
reporting the delay information to the second module based on the delay jitter value and the first delay.

21. The method according to claim 20, wherein reporting the delay information to the second module based on the delay jitter value and the first delay comprises:
reporting, to the second module, a target delay obtained based on the delay jitter value and the first delay.

22. The method according to claim 21, wherein the target delay comprises:
a sum of the delay jitter value and the first delay; or
a difference between the first delay and the delay jitter value.

23. The method according to claim 21 or 22, wherein
the first delay comprises:
a maximum delay and a minimum delay of the target data passing through the second submodule; and
correspondingly, the target delay comprises:
a maximum target delay obtained based on the maximum delay and the delay jitter value, and a minimum target delay obtained based on the minimum delay and the delay jitter value.

24. The method according to claim 23, wherein if the target data is the data sent by the first module, reporting, to the second module, the target delay obtained based on the delay jitter value and the first delay comprises:
reporting the maximum target delay to the second module via a maximum TX delay register of an inner forward error correction FEC; and
reporting the minimum target delay to the second module via a minimum TX delay register of the inner FEC.

25. The method according to claim 23, wherein if the target data is the data sent by the first module, reporting, to the second module, the target delay obtained based on the delay jitter value and the first delay comprises:
reporting the maximum target delay to the second module via a maximum TX delay register of a physical medium attachment PMA/physical media dependent PMD; and
reporting the minimum target delay to the second module via a minimum TX delay register of the PMA/PMD.

26. The method according to claim 23, wherein if the target data is the data received by the first module, reporting, to the second module, the target delay obtained based on the delay jitter value and the first delay comprises:
reporting the maximum target delay to the second module via a maximum RX delay register of an inner FEC; and
reporting the minimum target delay to the second module via a minimum RX delay register of the inner FEC.

27. The method according to claim 23, wherein if the target data is the data received by the first module, reporting, to the second module, the target delay obtained based on the delay jitter value and the first delay comprises:
reporting the maximum target delay to the second module via a maximum RX delay register of a PMA/PMD; and
reporting the minimum target delay to the second module via a minimum RX delay register of the PMA/PMD.

28. The method according to any one of claims 20 to 27, wherein the second submodule comprises:
a submodule other than the first submodule.

29. The method according to any one of claims 20 to 27, wherein the second submodule comprises:
a submodule in an inner FEC module that performs convolutional interleaving, distribution, and modulation encoding operations; or
a submodule in an inner FEC module that performs inverse convolutional deinterleaving, multiplexing, and modulation decoding operations.

30. The method according to any one of claims 20 to 29, wherein determining the first delay of the target data passing through the second submodule in the first module comprises:
obtaining the first delay that is preset.

31. The method according to any one of claims 20 to 29, wherein determining the first delay of the target data passing through the second submodule in the first module comprises:
collecting statistics on the first delay of the target data passing through the second submodule.

32. The method according to claim 31, wherein collecting statistics on the first delay of the target data passing through the second submodule comprises:
collecting statistics on a delay of at least one bit of the target data passing through the second submodule to obtain the first delay.

33. The method according to claim 19, wherein the method further comprises:
determining a second delay of the target data passing through a third submodule in the first module; and
reporting the delay information to the second module based on the delay jitter value comprises:
reporting the delay information to the second module based on the delay jitter value and the second delay.

34. The method according to claim 33, wherein the third submodule comprises:
a PMA submodule and/or a PMD submodule.

35. The method according to any one of claims 19 to 34, wherein the second module comprises:
a media access control MAC layer module.

36. The method according to any one of claims 19 to 35, wherein the fixed value is between 4.6 nanoseconds and 4.8 nanoseconds, or the fixed value is 4.5 nanoseconds, or the fixed value is between 9.1 nanoseconds and 9.3 nanoseconds.

37. The method according to any one of claims 19 to 36, wherein the first submodule comprises a submodule with a delay jitter caused by parity sequence addition or deletion, or padding sequence addition or deletion.

38. The method according to any one of claims 19 to 37, wherein the first submodule comprises a submodule with a delay jitter caused by data flow interleaving or deinterleaving.

39. The method according to any one of claims 19 to 38, wherein the first submodule comprises:
a submodule in the inner FEC module that performs inner FEC encoding, data flow interleaving, and padding sequence addition operations; or
a submodule in the inner FEC module that performs inner FEC decoding, data flow deinterleaving, and padding sequence deletion operations.

40. The method according to any one of claims 19 to 39, wherein the first submodule comprises:
a cyclic shift submodule.

41. The method according to any one of claims 19 to 40, wherein the target data comprises 8712*N data blocks or 8704*N data blocks, and N is a positive integer.

42. The method according to claim 41, wherein the data block comprises 128 bits or 120 bits.

43. The method according to any one of claims 19 to 40, wherein the target data comprises 1115136*N bits, 1114112*N bits, 1044480*N bits, or 1045440*N bits, and N is a positive integer.

44. A delay reporting apparatus, wherein the apparatus comprises:
a sending unit, configured to report a target delay corresponding to data at a plurality of specific locations in a data flow, wherein the plurality of specific locations are separated by a fixed length, and a periodicity of the plurality of specific locations corresponds to a periodicity of inserting a padding sequence into the data flow.

45. A delay reporting apparatus, used in a first module, wherein the apparatus comprises:
a processing unit, configured to obtain a delay jitter value of target data passing through a first submodule in the first module, wherein the first submodule comprises a submodule with a fixed delay jitter, the target data is data sent by the first module or data received by the first module, and the delay jitter value is the preset fixed value; and
a sending unit, configured to report delay information to a second module based on the delay jitter value.

46. A delay reporting apparatus, wherein the apparatus is configured to perform the method according to any one of claims 1 to 18, or the apparatus is configured to perform the method according to any one of claims 19 to 43.

47. A delay reporting apparatus, wherein the apparatus comprises an interface circuit and a processing circuit;
the interface circuit is configured to perform a data sending and/or receiving operation in the method according to any one of claims 1 to 18, and the processing circuit is configured to perform a data processing operation in the method according to any one of claims 1 to 18; or
the interface circuit is configured to perform a data sending and/or receiving operation in the method according to any one of claims 19 to 43, and the processing circuit is configured to perform a data processing operation in the method according to any one of claims 19 to 43.

48. The apparatus according to claim 47, wherein the apparatus is:
an optical module or a chip.

49. A device, comprising a processor and a memory, wherein
the memory is configured to store instructions or a computer program; and
the processor is configured to execute the instructions or the computer program to perform the method according to any one of claims 1 to 43.
